# EUROPÄISCHE PATENTSCHRIFT

(11) **EP 0 872 076 B1**
(45) Veröffentlichungstag und Bekanntmachung des Hinweises auf die Patenterteilung: **26.03.2003**
(21) Anmeldenummer: 96919532.0
(22) Anmeldetag: 13.05.1996
(51) Int. Cl.: H04L 9/08

(54) **VERFAHREN ZUM RECHNERGESTÜTZTEN AUSTAUSCH KRYPTOGRAPHISCHER SCHLÜSSEL ZWISCHEN EINER ERSTEN COMPUTEREINHEIT UND EINER ZWEITEN COMPUTEREINHEIT**
PROCESS FOR THE COMPUTER-CONTROLLED EXCHANGE OF CRYPTOGRAPHIC KEYS BETWEEN A FIRST AND A SECOND COMPUTER UNIT
PROCEDE D'ECHANGE ASSISTE PAR ORDINATEUR DE CODES CRYPTOGRAPHIQUES ENTRE UN PREMIER ET UN SECOND ORDINATEUR

(30) Priorität: 19.05.1995 DE 19518546; 19.05.1995 DE 19518545; 19.05.1995 DE 19518544
(43) Veröffentlichungstag der Anmeldung: 21.10.1998
(73) Patentinhaber: SIEMENS AKTIENGESELLSCHAFT, 80333 München (DE)
(72) Erfinder: HORN, Günther, D-81541 München (DE); MÜLLER, Klaus, D-81539 München (DE); KESSLER, Volker, D-85256 Vierkirchen (DE)
(86) Internationale Anmeldenummer: DE9600835
(87) Internationale Veröffentlichungsnummer: WO96037064

(56) Entgegenhaltungen:
- EP-A- 0 307 627
- EP-A- 0 460 538
- IEE PROCEEDINGS-COMPUTERS AND DIGITAL TECHNIQUES, MAY 1994, UK, Bd. 141, Nr. 3, ISSN 1350-2387, Seiten 193-195, XP000454518 HARN L: "Public-key cryptosystem design based on factoring and discrete logarithms"
- IEEE IN HOUSTON. GLOBECOM '93. IEEE GLOBAL TELECOMMUNICATIONS CONFERENCE, INCLUDING A COMMUNICATIONS THEORY MINI-CONFERENCE. TECHNICAL PROGRAM CONFERENCE RECORD (CAT. NO.93CH3250-8), PROCEEDINGS OF GLOBECOM '93. IEEE GLOBAL TELECOMMUNICATIONS CONFERE, ISBN 0-7803-0917-0, 1993, NEW YORK, NY, USA, IEEE, USA, Seiten 164-170 vol.1, XP000428048 TSUBAKIYAMA H ET AL: "Security for information data broadcasting system with conditional-access control"
- IEEE PERSONAL COMMUNICATIONS, 1994, USA, Bd. 1, Nr. 1, ISSN 1070-9916, Seiten 25-31, XP000460718 AZIZ A ET AL: "Privacy and authentication for wireless local area networks"

## Beschreibung

Informationstechnische Systeme unterliegen verschiedenen Bedrohungen. So kann z. B. übertragene Information von einem unbefugten Dritten abgehört und verändert werden. Eine weitere Bedrohung bei der Kommunikation zweier Kommunikationspartner liegt in der Vorspiegelung einer falschen Identität eines Kommunikationspartners.

Diesen und weiteren Bedrohungen wird durch verschiedene Sicherheitsmechanismen, die das informationstechnische System vor den Bedrohungen schützen sollen, begegnet. Ein zur Sicherung verwendeter Sicherheitsmechanismus ist die Verschlüsselung der übertragenen Daten. Damit die Daten in einer Kommunikationsbeziehung zwischen zwei Kommunikationspartnern verschlüsselt werden können, müssen vor der Übertragung der eigentlichen Daten zuerst Schritte durchgeführt werden, die die Verschlüsselung vorbereiten. Die Schritte können z. B. darin bestehen, daß sich die beiden Kommunikationspartner auf einen Verschlüsselungsalgorithmus einigen und daß ggf. die gemeinsamen geheimen Schlüssel vereinbart werden.

Besondere Bedeutung gewinnt der Sicherheitsmechanismus der Verschlüsselung bei Mobilfunksystemen, da die übertragenen Daten in diesen Systemen von jedem Dritten ohne besonderen zusätzlichen Aufwand abgehört werden können.

Dies führt zu der Anforderung, eine Auswahl bekannter Sicherheitsmechanismen so zu treffen und diese Sicherheitsmechanismen geeignet zu kombinieren, sowie Kommunikationsprotokolle zu spezifizieren, daß durch sie die Sicherheit von informationstechnischen Systemen gewährleistet wird.

Es sind verschiedene asymmetrische Verfahren zum rechnergestützen Austausch kryptographischer Schlüssel bekannt. Asymmetrische Verfahren, die geeignet sind für Mobilfunksysteme, sind (A. Aziz, W. Diffie, "Privacy and Authentication for Wireless Local Area Networks", IEEE Personal Communications, 1994, S. 25 bis 31) und (M. Beller, "Proposed Authentication and Key Agreement Protocol for PCS", Joint Experts Meeting on Privacy and Authentication for Personal Communications, P&A JEM 1993, 1993, S. 1 bis 11).

Das in (A. Aziz, W. Diffie, "Privacy and Authentication in Wireless Local Area Networks", IEEE Personal Communications, 1994, S. 25 bis 31) beschriebene Verfahren bezieht sich ausdrücklich auf lokale Netzwerke und stellt höhere Rechenleistungsanforderungen an die Computereinheiten der Kommunikationspartner während des Schlüsselaustauschs. Außerdem wird in dem Verfahren mehr Übertragungskapazität benötigt als in dem erfindungsgemäßen Verfahren, da die Länge der Nachrichten größer ist als bei dem erfindungsgemäßen Verfahren.

Das in (M. Beller, "Proposed Authentication and Key Agreement Protocol for PCS", Joint Experts Meeting on Privacy and Authentication for Personal Communications, P&A JEM 1993, 1993, S. 1 bis 11) beschriebene Verfahren hat einige grundlegende Sicherheitsziele nicht realisiert. Die explizite Authentifikation des Netzes durch den Benutzer wird nicht erreicht. Außerdem wird ein vom Benutzer an das Netz übertragener Schlüssel vom Netz nicht an den Benutzer bestätigt. Auch eine Zusicherung der Frische (Aktualität) des Schlüssels für das Netz ist nicht vorgesehen. Ein weiterer Nachteil dieses Verfahrens besteht in der Beschränkung auf das Rabin-Verfahren bei der impliziten Authentifizierung des Schlüssels durch den Benutzer. Dies schränkt das Verfahren in einer flexibleren Anwendbarkeit ein. Außerdem ist kein Sicherheitsmechanismus vorgesehen, der die Nichtabstreitbarkeit von übertragenen Daten gewährleistet. Dies ist ein erheblicher Nachteil vor allem auch bei der Erstellung unanfechtbarer Gebührenabrechnungen für ein Mobilfunksystem. Auch die Beschränkung des Verfahrens auf den National Institute of Standards in Technology Signature Standard (NIST DSS) als verwendete Signaturfunktion schränkt das Verfahren in seiner allgemeinen Verwendbarkeit ein.

Es ist ein Verfahren zum sicheren Datenaustausch zwischen vielen Teilnehmern unter Mitwirkung einer Zertifizierungsinstanz bekannt (US-Patentschrift US 5 214 700). Das bei diesem Verfahren verwendete Protokoll weist eine Zufallszahl, eine Identitätsangabe sowie einen öffentlichen Schlüssel und einen Sitzungsschlüssel auf. Grundlegende Sicherheitsziele werden jedoch bei diesem Verfahren nicht realisiert.

Weiterhin ist ein Verfahren für eine PC-PC-Kommunikation unter Mitwirkung eines Trust-Centers bekannt (DE-Broschüre: Telesec. Telekom, Produktentwicklung Telesec beim Fernmeldeamt Siegen, S. 12-13 und Bild 16).

Aus der US-Patentschrift US 5 222 140 ist ein Verfahren bekannt, bei dem unter Verwendung sowohl eines öffentlichen als auch eines geheimen Schlüssels sowie unter Verwendung einer Zufallszahl ein Sitzungsschlüssel erzeugt wird. Dieser wird mit einem öffentlichen Schlüssel verknüpft.

Weiterhin ist aus der Patentschrift US 5 153 919 ein Verfahren beschrieben, bei dem eine Benutzereinheit sich gegenüber einer Netzeinheit identifiziert. Anschließend findet unter Anwendung einer Hash-Funktion zwischen der Benutzereinheit und der Netzeinheit ein Authentifizierungsprozeß statt.

Weitere sichere Kommunikationsprotokolle, die aber wesentliche grundlegende Sicherheitsziele nicht realisieren, sind bekannt (M. Beller et al, Privacy and Authentication on a Portable Communication System, IEEE Journal on Selected Areas in Communications, Vol. 11, No. 6, S. 821-829, 1993).

Das Problem der Erfindung liegt darin, ein vereinfachtes Verfahren zum rechnergestützten Austausch kryptographischer Schlüssel anzugeben.

Dieses Problem wird durch das Verfahren gemäß Patentanspruch 1 gelöst. Vorteilhafte Weiterbildungen der Erfindung ergeben sich aus den abhängigen Ansprüchen.

Es wird aus einer ersten Zufallszahl mit Hilfe eines erzeugenden Elements einer endlichen Gruppe in der ersten Computereinheit ein erster Wert gebildet und eine erste Nachricht von der ersten Computereinheit an die zweite Computereinheit übertragen, wobei die ersten Nachricht mindestens den ersten Wert aufweist. In der zweiten Computereinheit wird ein Sitzungsschlüssel mit Hilfe einer ersten Hash-Funktion gebildet, wobei eine erste Eingangsgröße der ersten Hash-Funktion mindestens einen ersten Term aufweist, der gebildet wird durch eine Exponentiation des ersten Werts mit einem geheimen Netzschlüssel. In der ersten Computereinheit wird der Sitzungsschlüssel gebildet mit Hilfe der ersten Hash-Funktion, wobei eine zweite Eingangsgröße der ersten Hash-Funktion mindestens einen zweiten Term aufweist, der gebildet wird durch eine Exponentiation eines öffentlichen Netzschlüssels mit der ersten Zufallszahl. Ferner wird in der ersten Computereinheit mit Hilfe einer zweiten Hash-Funktion oder der ersten Hash-Funktion eine vierte Eingangsgröße gebildet, wobei eine dritte Eingangsgröße für die erste Hash-Funktion oder für die zweite Hash-Funktion zur Bildung der vierten Eingangsgröße mindestens den Sitzungsschlüssel aufweist. Daraufhin wird in der ersten Computereinheit ein Signaturterm aus mindestens der vierten Eingangsgröße gebildet unter Anwendung einer ersten Signaturfunktion. Eine dritte Nachricht wird von der ersten Computereinheit an die zweite Computereinheit übertragen, wobei die dritte Nachricht mindestens den Signaturterm der ersten Computereinheit aufweist. In der zweiten Computereinheit wird der Signaturterm verifiziert.

Die durch das erfindungsgemäße Verfahren erreichten Vorteile liegen vor allem in einer erheblichen Reduktion der Länge der übertragenen Nachrichten und in der Realisierung weiterer Sicherheitsziele.

Durch das erfindungsgemäße Verfahren werden folgende Sicherheitsziele realisiert:
- Gegenseitige explizite Authentifizierung von dem Benutzer und dem Netz, d. h. die gegenseitige Verifizierung der behaupteten Identität,
- Schlüsselvereinbarung zwischen dem Benutzer und dem Netz mit gegenseitiger impliziter Authentifizierung, d. h. daß durch das Verfahren erreicht wird, daß nach Abschluß der Prozedur ein gemeinsamer geheimer Sitzungsschlüssel zur Verfügung steht, von dem jede Partei weiß, daß nur das authentische Gegenüber sich ebenfalls im Besitz des geheimen Sitzungsschlüssels befinden kann,
- Zusicherung der Frische (Aktualität) des Sitzungsschlüssels für den Benutzer,
- gegenseitige Bestätigung des Sitzungsschlüssels von dem Benutzer und dem Netz, d. h. die Bestätigung, daß das Gegenüber tatsächlich im Besitz des vereinbarten geheimen Sitzungsschlüssels ist.

Auf diese Sicherheitsziele beziehen sich auch die folgenden vorteilhaften Weiterbildungen des Verfahrens.

Bei der Weiterbildung des Verfahrens gemäß den Patentanspruch 2 wird zusätzlich in der ersten Computereinheit ein vertrauenswürdiger öffentlicher Benutzerschlüssel der ersten Computereinheit z. B. in Form eines Benutzerzertifikats verfügbar gemacht und in der zweiten Computereinheit wird ein vertrauenswürdiger öffentlicher Netzschlüssel der zweiten Computereinheit z. B. in Form eines Netzzertifikats verfügbar gemacht. Der öffentliche Netzschlüssel muß bei dieser Weiterbildung nicht in der ersten Computereinheit verfügbar sein.

Durch die Weiterbildung des Verfahrens gemäß den Patentanspruch 3 ist es nicht nötig, daß der öffentliche Benutzerschlüssel in der zweiten Computereinheit verfügbar ist.

Bei der Weiterbildung des Verfahrens gemäß Patentanspruch 4 ist in der ersten Computereinheit kein vertrauenswürdiger öffentlicher Netzschlüssel der zweiten Computereinheit erforderlich. In der ersten Computerenheit ist ein vertrauenswürdiger öffentlicher Zertifizierungsschlüssel der Zertifizierungscomputereinheit verfügbar. Dies bedeutet, daß die erste Computereinheit sich den vertrauenswürdigen öffentlichen Netzschlüssel in Form eines Netzzertifikats von einer Zertifizierungscomputereinheit "besorgen" muß. Ebenso braucht die zweite Computereinheit den vertrauenswürdigen öffentlichen Benutzerschüssel in Form eines Benutzerzertifikats von der Zertifizierungscomputereinheit.

Durch die Weiterbildungen des erfindungsgemäßen Verfahrens gemäß den Patentansprüchen 6 und 12 wird das Sicherheitsziel der Benutzeranonymität realisiert, d. h. die Vertraulichkeit der Identität des Benutzers gegenüber Dritten.

Die Weiterbildung des erfindungsgemäßen Verfahrens gemäß Patentanspruch 8 ermöglicht die Verwendung von temporären Benutzeridentitäten.

Durch die Weiterbildung des Verfahrens gemäß Patentanspruch 9 wird vor allem eine zusätzliche Authentifizierung der zweiten Computereinheit gegenüber der ersten Computereinheit gewährleistet.

Durch die Weiterbildung gemäß Patentanspruch 11 wird das Sicherheitsziel der Zusicherung der Frische (Aktualität) des Sitzungsschlüssels für das Netz realisiert.

Durch die Weiterbildung des erfindungsgemäßen Verfahrens gemäß Patentanspruch 14 wird zusätzlich das Sicherheitsziel der Nichtabstreitbarkeit von Daten realisiert, die vom Benutzer an das Netz gesendet wurden.

Das erfindungsgemäße Verfahren ist außerdem sehr leicht an unterschiedliche Anforderungen anpaßbar, da es sich nicht auf bestimmte Algorithmen für Signaturbildung und Verschlüsselung beschränkt.

Die Zeichnungen stellen bevorzugte Ausführungsbeispiele der Erfindung dar, die im folgenden näher beschrieben werden.

Es zeigen
- Figur 1: ein Ablaufdiagramm, das ein erstes Ausführungsbeispiel des erfindungsgemäßen Verfahrens mit einigen Weiterbildungen darstellt;
- Figur 2: ein Ablaufdiagramm, das das erste Ausführungsbeispiel des erfindungsgemäßen Verfahrens mit zusätzlich realisierten Sicherheitszielen mit einigen Weiterbildungen beschreibt.
- Figur 3: ein Ablaufdiagramm, das ein zweites Ausführungsbeispiel des erfindungsgemäßen Verfahrens mit einigen Weiterbildungen darstellt;
- Figur 4: ein Ablaufdiagramm, das das zweite Ausführungsbeispiel des erfindungsgemäßen Verfahrens mit zusätzlich realisierten Sicherheitszielen mit einigen Weiterbildungen beschreibt.
- Figuren 5a, b: ein Ablaufdiagramm, das ein drittes Ausführungsbeispiel des erfindungsgemäßen Verfahrens mit einigen Weiterbildungen darstellt;

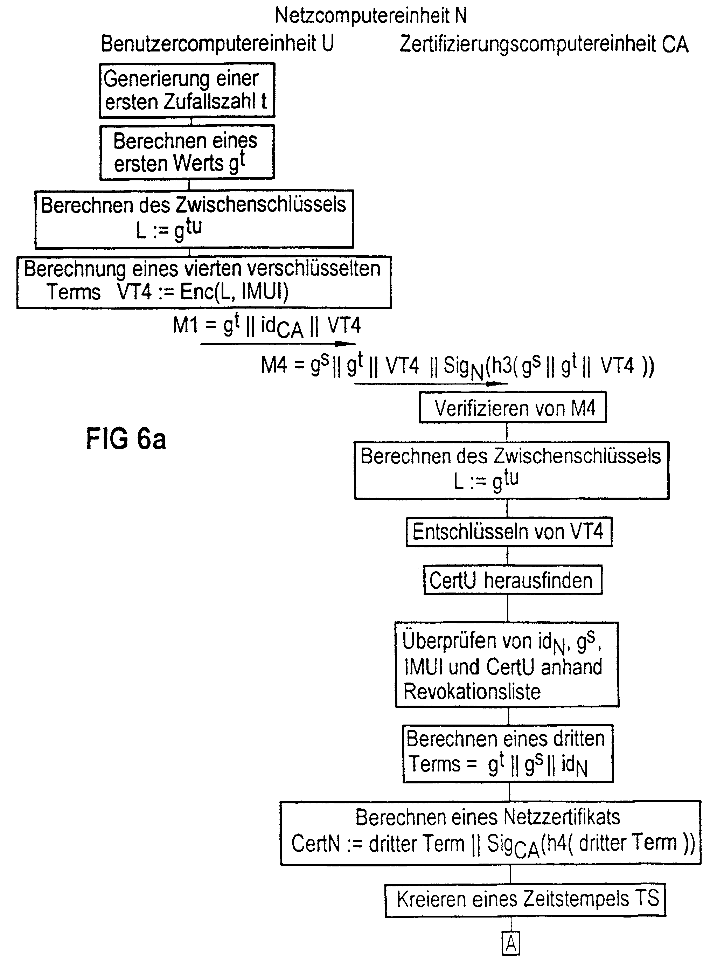

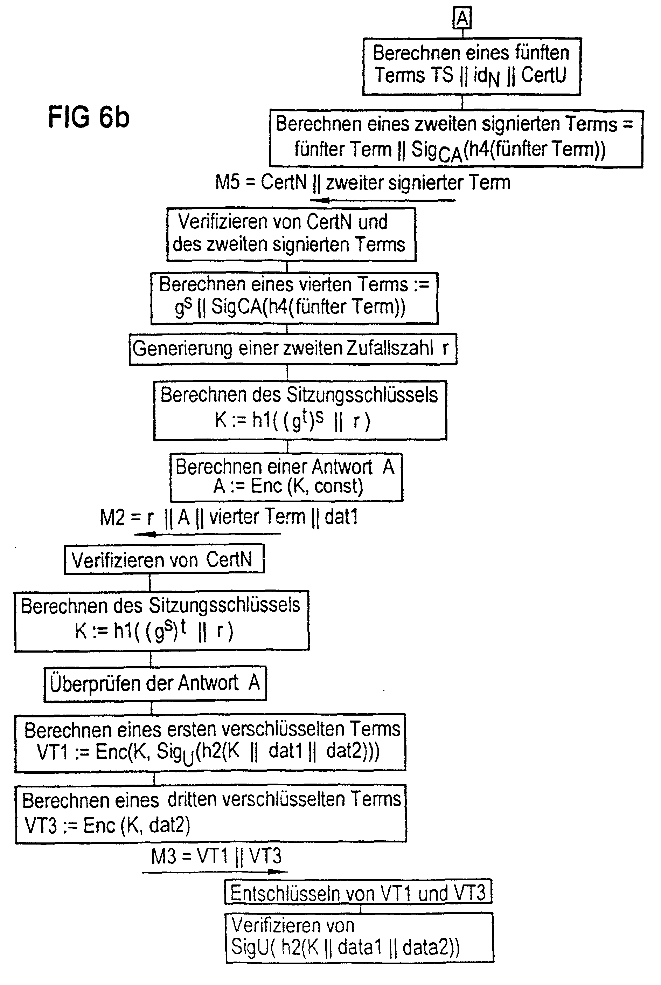

- Figuren 6a, b: ein Ablaufdiagramm, das das dritte Ausführungsbeispiel des erfindungsgemäßen Verfahrens mit zusätzlich realisierten Sicherheitszielen mit einigen Weiterbildungen beschreibt.

### Erstes Ausführungsbeispiel

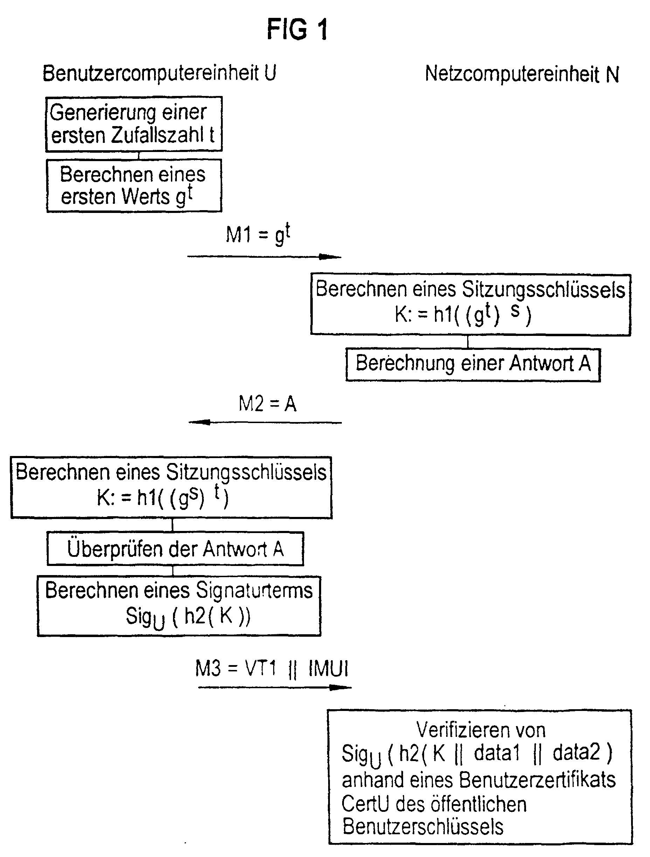

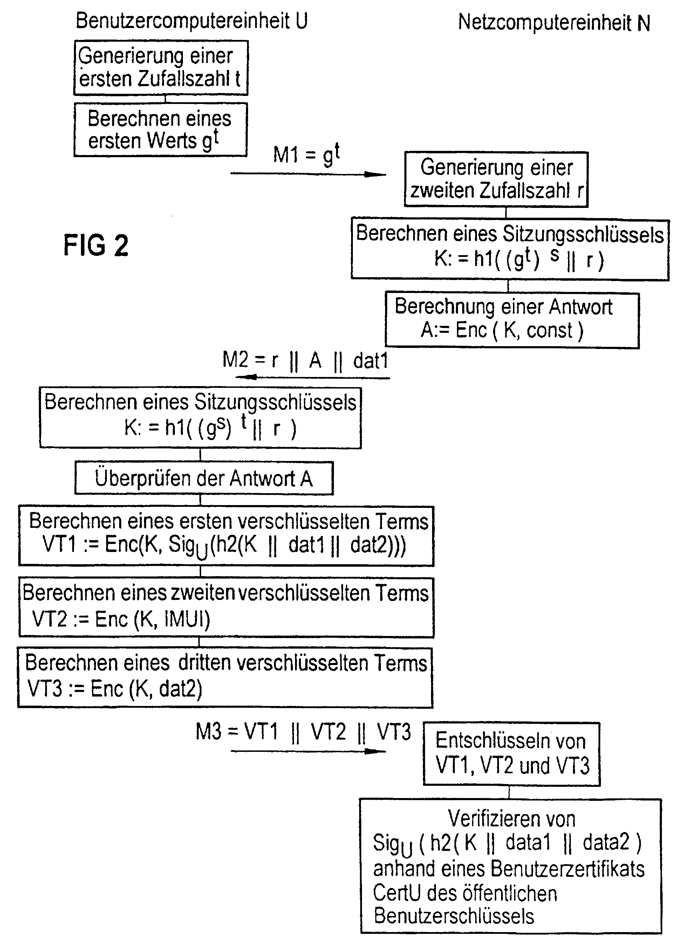

In den Figuren 1 und 2 sind durch zwei Skizzen der Ablauf des erfindungsgemäßen Verfahrens dargestellt. Das erfindungsgemäße Verfahren betrifft den Austausch kryptographischer Schlüssel zwischen einer ersten Computereinheit U und einer zweiten Computereinheit N, wobei unter der ersten Computereinheit U eine Computereinheit eines Benutzers eines Mobilfunknetzes zu verstehen ist und unter einer zweiten Computereinheit N eine Computereinheit des Netzbetreibers eines Mobilfunksystems zu verstehen ist.

Die Erfindung beschränkt sich jedoch nicht auf ein Mobilfunksystem und somit auch nicht auf einen Benutzer eines Mobilfunksystems und das Netz, sondern kann in allen Bereichen angewendet werden, in denen ein kryptographischer Schlüsselaustausch zwischen zwei Kommunikationspartnern benötigt wird. Dies kann z. B. in einer Kommunikationsbeziehung zwischen zwei Rechnern, die Daten in verschlüsselter Form austauschen wollen, der Fall sein. Ohne Beschränkung der Allgemeingültigkeit wird im folgenden also ein erster Kommunikationspartner als erste Computereinheit U und ein zweiter Kommunikationspartner als zweite Computereinheit N bezeichnet.

Für das erfindungsgemäße Verfahren gemäß Anspruch 1 wird vorausgesetzt, daß in der ersten Computereinheit U ein vertrauenswürdiger öffentlicher Netzschlüssel g^{s} der zweiten Computereinheit N verfügbar ist und daß in der zweiten Computereinheit N ein vertrauenswürdiger öffentlicher Benutzerschlüssel g^{u} der ersten Computereinheit U verfügbar ist, wobei g ein erzeugendes Element einer endlichen Gruppe ist.

In der ersten Computereinheit U wird eine erste Zufallszahl t generiert. Aus der ersten Zufallszahl t wird mit Hilfe des erzeugenden Elements g einer endlichen Gruppe in der ersten Computereinheit U ein erster Wert g^{t} gebildet.

Asymmetrische Verfahren beruhen im wesentlichen auf zwei Problemen der Komplexitätstheorie, dem Problem zusammengesetzte Zahlen effizient zu faktorisieren, und dem diskreten Logarithmusproblem (DLP). Das DLP besteht darin, daß in geeigneten Rechenstrukturen zwar Exponentiationen effizient durchgeführt werden können, daß jedoch für die Umkehrung dieser Operation, das Logarithmieren, keine effizienten Algorithmen bekannt sind.

Solche Rechenstrukturen sind z. B. unter den oben bezeichneten endlichen Gruppen zu verstehen. Diese sind z. B. die multiplikative Gruppe eines endlichen Körpers (z. B. Multiplizieren Modulo p, wobei p eine große Primzahl ist), oder auch sogenannte "elliptische Kurven". Elliptische Kurven sind vor allem deshalb interessant, weil sie bei gleichem Sicherheitsniveau wesentliche kürzere Sicherheitsparameter erlauben. Dies betrifft die Länge der öffentlichen Schlüssel, die Länge der Zertifikate, die Länge der bei der Sitzungsschlüsselvereinbarung auszutauschenden Nachrichten sowie die Länge von digitalen Signaturen, die jeweils im weiteren beschrieben werden. Der Grund dafür ist, daß die für elliptische Kurven bekannten Logarithmierverfahren wesentlich weniger effizient sind als die für endliche Körper.

Eine große Primzahl in diesem Zusammenhang bedeutet, daß die Größe der Primzahl so gewählt werden muß, daß die Logarithmierung so aufwendig ist, daß sie nicht in vertretbarer Zeit durchgeführt werden kann. Vertretbar bedeutet in diesem Zusammenhang einen Zeitraum entsprechend der Sicherheitspolitik von mehreren Jahren bis Jahrzehnten und länger.

Nach der Berechnung des ersten Werts g^{t} wird eine erste Nachricht M1 codiert, die mindestens den ersten Wert g^{t} aufweist. Die erste Nachricht M1 wird von der ersten Computereinheit U an die zweite Computereinheit N übertragen.

In der zweiten Computereinheit N wird die erste Nachricht M1 decodiert. Die erste Nachricht M1 kann auch über einen unsicheren Kanal, also auch über eine Luftschnittstelle, unverschlüsselt übertragen werden, da die Logarithmierung des ersten Wertes g^{t} nicht in vertretbarer Zeit durchgeführt werden kann.

Wie in Figur 2 beschrieben, kann es vorgesehen sein, daß in der zweiten Computereinheit N eine zweite Zufallszahl r generiert wird. Durch diesen zusätzlichen Verfahrensschritt wird ein zusätzliches Sicherheitsziel realisiert: die Zusicherung der Frische (Aktualität) eines im folgenden beschriebenen Sitzungsschlüssels K für die zweite Computereinheit N.

In der zweiten Computereinheit N wird mit Hilfe einer ersten Hash-Funktion h1 ein Sitzungsschlüssel K gebildet. Als eine erste Eingangsgröße der ersten Hash-Funktion h1 wird mindestens ein erster Term verwendet. Der erste Term wird gebildet, indem der erste Wert g^{t} potenziert wird mit einem geheimen Netzschlüssel s.

Unter einer Hash-Funktion ist in diesem Zusammenhang eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren wird für die Hash-Funktion in diesem Zusammenhang Kollisionsfreiheit gefordert, d. h. es darf nicht möglich sein, zwei verschiedene Eingangszeichenfolgen zu finden, die dieselbe Ausgangszeichenfolge ergeben.

Wenn die zweite Zufallszahl r verwendet wird, so weist die erste Eingangsgröße der ersten Hash-Funktion h1 zusätzlich mindestens die zweite Zufallszahl r auf.

Nun wird in der zweiten Computereinheit N eine Antwort A gebildet. Zur Bildung der Antwort A sind verschiedene Varianten vorgesehen. So ist es z. B. möglich, daß mit dem Sitzungsschlüssel K unter Verwendung einer Verschlüsselungsfunktion Enc eine Konstante const verschlüsselt wird. Die Konstante const ist sowohl der ersten Computereinheit U als auch der zweiten Computereinheit N bekannt. Auch die Verschlüsselungsfunktion Enc ist sowohl der zweiten Computereinheit N alsauch der ersten Computereinheit U als die in dem Verfahren zu verwendende Verschlüsselungsfunktion bekannt.

Eine weitere Möglichkeit, die Antwort A zu bilden liegt z. B. darin, daß der Sitzungsschlüssel K als Eingangsgröße für eine dritte Hash-Funktion h3 verwendet wird und der "gehashte" Wert des Sitzungsschlüssels K als Antwort A verwendet wird. Weitere Möglichkeiten, die Antwort A zu bilden, die zur Überprüfung des Sitzungsschlüssels K in der ersten Computereinheit U verwendet wird, sind dem Fachmann geläufig und können als Varianten zu den beschriebenen Vorgehensweisen verwendet werden.

Eine Aneinanderreihung der zweiten Zufallszahl r, der Antwort A, sowie ein optionales erstes Datenfeld dat1 bilden eine zweite Nachricht M2. Die zweite Zufallszahl r und das optionale erste Datenfeld dat1 sind nur in der zweiten Nachrichten 112 enthalten, wenn diese in dem erfindungsgemäßen Verfahren vorgesehen werden.

Die zweite Nachricht M2 wird in der zweiten Computereinheit N codiert und zu der ersten Computereinheit U übertragen.

In der ersten Computereinheit U wird die zweite Nachricht M2 decodiert, so daß die erste Computereinheit U eventuell die zweite Zufallszahl r, die Antwort A sowie eventuell das optionale erste Datenfeld dat1 zur Verfügung hat. Die Länge des optionalen ersten Datenfeldes dat1 kann beliebig groß sein, d. h. es ist auch möglich, daß das optionale erste Datenfeld dat1 nicht vorhanden ist.

In der ersten Computereinheit U wird nun ebenfalls der Sitzungsschlüssel K gebildet, mit Hilfe der ersten Hash-Funktion h1, die sowohl der zweiten Computereinheit N als auch der ersten Computereinheit U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation eines öffentlichen Netzschlüssels g^{s} mit der ersten Zufallszahl t. Wenn die Verwendung der zweiten Zufallszahl r in dem erfindungsgemäßen Verfahren vorgesehen wird, so weist die zweite Eingangsgröße der ersten Hash-Funktion h1 zur Bildung des Sitzungsschlüssels K in der ersten Computereinheit U zusätzlich die zweite Zufallszahl auf.

Durch die Verwendung der ersten Zufallszahl t und der zweiten Zufallszahl r bei der Generierung des Sitzungsschlüssels K wird die Aktualität des Sitzungsschlüssels K gewährleistet, da jeweils die erste Zufallszahl t als auch die zweite Zufallszahl r nur für jeweils einen Sitzungsschlüssel K verwendet werden.

Somit wird eine Wiedereinspielung eines älteren Schlüssels als Sitzungsschlüssel K verhindert. Die Aktualität des Sitzungsschlüssels K ist auch bedeutend im Zusammenhang mit der Fragestellung, wie groß die erste Zufallszahl t sowie die zweite Zufallszahl r sein müssen. Dies wird deutlich, da eine geringere Länge der Zufallszahlen das DLP-Problem verringern, d. h. je kürzer die Zufallszahl ist, desto einfacher ist die Logarithmierung, also z. B. das Herausfinden der ersten Zufallszahl t aus dem ersten Wert g^{t}. Wenn aber für jeden neuen Sitzungsschlüssel K andere Zufallszahlen verwendet werden, so ist die Wahrscheinlichkeit, daß der verwendete Sitzungsschlüssel K von einem unbefugten Dritten schon herausgefunden wurde, wesentlich geringer. Damit ist die Gefahr, daß der Teil einer Nachricht, der mit dem Sitzungsschlüssel K verschlüsselt ist, von einem unbefugten Dritten entschlüsselt werden kann, erheblich reduziert.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt. Abhängig von den im vorigen beschriebenen Varianten zur Bildung der Antwort A sind verschiedene Möglichkeiten vorgesehen, den Sitzungsschlüssel K anhand der Antwort A zu überprüfen.

Eine Möglichkeit besteht z. B. darin, daß, wenn die Antwort A in der zweiten Computereinheit N durch Verschlüsselung der Konstante const mit dem Sitzungsschlüssel K unter Verwendung der Verschlüsselungsfunktion Enc gebildet wurde, die Antwort A entschlüsselt wird, und somit die erste Computereinheit U eine entschlüsselte Konstante const' erhält, die mit der bekannten Konstante const verglichen wird.

Die Überprüfung des Sitzungsschlüssels K anhand der Antwort A kann auch durchgeführt werden, indem die der ersten Computereinheit U bekannte Konstante const mit dem in der ersten Computereinheit U gebildeten Sitzungsschlüssel K unter Verwendung der Verschlüsselungsfunktion Enc verschlüsselt wird und das Ergebnis mit der Antwort A auf Übereinstimmung geprüft wird. Diese Vorgehensweise wird z. B. auch verwendet, wenn die Antwort A in der zweiten Computereinheit N gebildet wird, indem auf den Sitzungsschlüssel K die dritte Hash-Funktion h3 angewendet wird. In diesem Fall wird in der ersten Computereinheit U der in der ersten Computereinheit U gebildete Sitzungsschlüssel K als Eingangsgröße der dritten Hash-Funktion h3 verwendet. Der "gehashte" Wert des in der ersten Computereinheit U gebildeten Sitzungsschlüssels K wird dann mit der Antwort A auf Übereinstimmung geprüft. Damit wird das Ziel der Schlüsselbestätigung des Sitzungsschlüssels K erreicht.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweite Computereinheit N durch die erste Computereinheit U authentifiziert. Dies wird erreicht, vorausgesetzt daß für die erste Computereinheit U bekannt ist, daß der öffentliche Netzschlüssel g^{s} tatsächlich zur zweite Computereinheit N gehört.

Im Anschluß an die Bestätigung des Sitzungsschlüssels K durch Überprüfung der Antwort A wird ein Signaturterm berechnet. Hierzu wird mit Hilfe einer zweiten Hash-Funktion h2 eine vierte Eingangsgröße gebildet. Die zweite Hash-Funktion h2 kann, muß aber nicht dieselbe Hash-Funktion sein wie die erste Hash-Funktion h1. Als eine dritte Eingangsgröße für die zweite Hash-Funktion h2 wird ein Term verwendet, der mindestens den Sitzungsschlüssel K enthält. Weiterhin kann die dritte Eingangsgröße das optionale erste Datenfeld dat1 oder auch ein optionales zweites Datenfeld dat2 enthalten, wenn deren Verwendung in dem erfindungsgemäßen Verfahren vorgesehen wird.

Es kann später nicht abgestritten werden, daß die Daten, die im ersten optionale Datenfeld dat1 und im zweiten optionalen Datenfeld dat2 enthalten sind, von der ersten Computereinheit U gesendet wurden.

Die in dem ersten optionalen Datenfeld dat1 und in dem zweiten optionalen Datenfeld dat2 enthaltenen Daten können z. B. Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Außerdem wird, falls das Sicherheitsziel "Anonymität des Benutzers" realisiert werden soll, ein zweiter verschlüsselter Term VT2 berechnet, in dem eine Identitätsgröße IMUI der ersten Computereinheit U mit dem Sitzungschlüssel K mit Hilfe der Verschlüsselungsfunktion Enc verschlüsselt wird. Bei Verwendung eines optionalen zweiten Datenfeldes dat2 wird in der ersten Computereinheit U ein dritter verschlüsselter Term VT3 berechnet, indem das optionale zweite Datenfeld dat2 mit dem Sitzungsschlüssel K unter Verwendung der Verschlüsselungsfunktion Enc verschlüsselt wird, das optionale zweite Datenfeld dat2 kann auch unverschlüsselt übertragen werden.

In der ersten Computereinheit U wird eine dritte Nachricht M3 gebildet und codiert, die mindestens den Signaturterm und die Identitätsgröße IMUI der ersten Computereinheit U aufweist.

Falls die Anonymität der ersten Computereinheit U gewährleistet werden soll, weist die dritte Nachricht M3 anstatt der Identitäsgröße IMUI der ersten Computereinheit U mindestens den zweiten verschlüsselten Term VT2 auf, der die Information über die Identität der ersten Computereinheit U in verschlüsselter Form enthält, die nur von der zweiten Computereinheit N entschlüsselt werden kann.

Wenn die Verwendung des optionalen zweiten Datenfelds dat2 vorgesehen wird, weist die dritte Nachricht M3 zusätzlich mindestens den dritten verschlüsselten Term VT3 oder das optionale zweite Datenfeld dat2 im Klartext auf.

Wenn die dritte Nachricht M3 den ersten verschlüsselten Term VT1, den zweiten verschlüsselten Term VT2 oder den dritten verschlüsselten Term VT3 enthält, werden diese in der zweiten Computereinheit N entschlüsselt. Dies geschieht für den eventuell vorhandenen ersten verschlüsselten Term VT1 vor der Verifikation des Signaturterms.

Die dritte Nachricht M3 wird von der ersten Computereinheit U zu der zweiten Computereinheit N übertragen.

Zusätzlich wird die Authentifikation der ersten Computereinheit U gegenüber der zweiten Computereinheit N durch den Signaturterm gewährleistet, durch deren Verwendung garantiert wird, daß die dritte Nachricht M3 tatsächlich aktuell von der ersten Computereinheit U gesendet wurde.

In der zweiten Computereinheit N wird die dritte Nachricht M3 decodiert und anschließend wird anhand eines Benuterzertifikats CertU, das der zweiten Computereinheit N zur Verfügung steht, der Signaturterm verifiziert.

Wenn für das erfindungsgemäße Verfahren temporäre Benutzeridentitäten vorgesehen werden, so wird das im vorigen beschriebene Verfahren um einige Verfahrensschritte erweitert.

Zuerst muß der zweiten Computereinheit N bekannt gemacht werden, welche erste Computereinheit U eine neue temporäre Identitätsgröße TMUIN von der zweiten Computereinheit N zugewiesen bekommen soll.

Hierzu wird als zusätzlicher Bestandteil der ersten Nachricht M1 eine alte temporäre Identitätsgröße TMUIO von der ersten Computereinheit U an die zweite Computereinheit N übertragen.

Nach Empfang der ersten Nachricht M1 ist somit in der zweiten Computereinheit N bekannt, für welche erste Computereinheit U die neue temporäre Identitätsgröße TMUIN bestimmt ist.

In der zweiten Computereinheit N wird dann die neue temporäre Identitätsgröße TMUIN für die erste Computereinheit U gebildet. Dies kann z. B. durch Generierung einer Zufallszahl oder durch Tabellen, in denen mögliche Identitätsgrößen abgespeichert sind, durchgeführt werden. Aus der neuen temporären Identitätsgröße TMUIN der ersten Computereinheit U wird in der zweiten Computereinheit N ein vierter verschlüsselter Term VT4 gebildet, indem die neue temporäre Identitätsgröße TMUIN der ersten Computereinheit U mit dem Sitzungsschlüssel K unter Verwendung der Verschlüsselungsfunktion Enc verschlüsselt wird.

In diesem Fall weist die zweite Nachricht N2 zusätzlich mindestens den vierten verschlüsselten Term VT4 auf. Der vierte verschlüsselte Term VT4 wird dann in der ersten Computereinheit U entschlüsselt. Nun ist die neue temporäre Identitätsgörße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korekt empfangen hat, weist die dritte Eingangsgröße für die erste Hash-Funktion h1 oder für die zweite Hash-Funktion h2 zusätzlich mindestens die neue temporäre Identitätsgröße TMUIN der ersten Computereinheit U auf.

Da die Information der neuen temporären Identitätsgröße TMUIN in dem Signaturterm in diesem Fall enthalten ist, weist die dritte Nachricht M3 nicht mehr die Identitätsgröße IMUI der ersten Computereinheit U auf.

Es ist auch möglich, die neue temporäre Identitätsgröße TMUIN nicht in den Signaturterm zu integrieren, sondern den zweiten verschlüsselten Term VT2 zu bilden, indem anstant der Identitätsgröße IMUI der ersten Computereinheit U die neue temporäre Identitätsgröße TMUIN mit dem Sitzungsschlüssel K unter Verwendung der Verschlüsselungsfunktion Enc verschlüsselt wird. In diesem Fall weist die dritte Nachricht M3 zusätzlich den zweiten verschlüsselten Term VT2 auf.

Die in dem erfindungsgemäßen Verfahren verwendeten Hash-Funktionen, die erste Hash-Funktion h1, die zweite Hash-Funktion h2 und die dritte Hash-Funktion h3 können durch die gleiche, aber auch durch verschiedene Hash-Funktionen realisiert werden.

### Zweites Ausführungsbeispiel

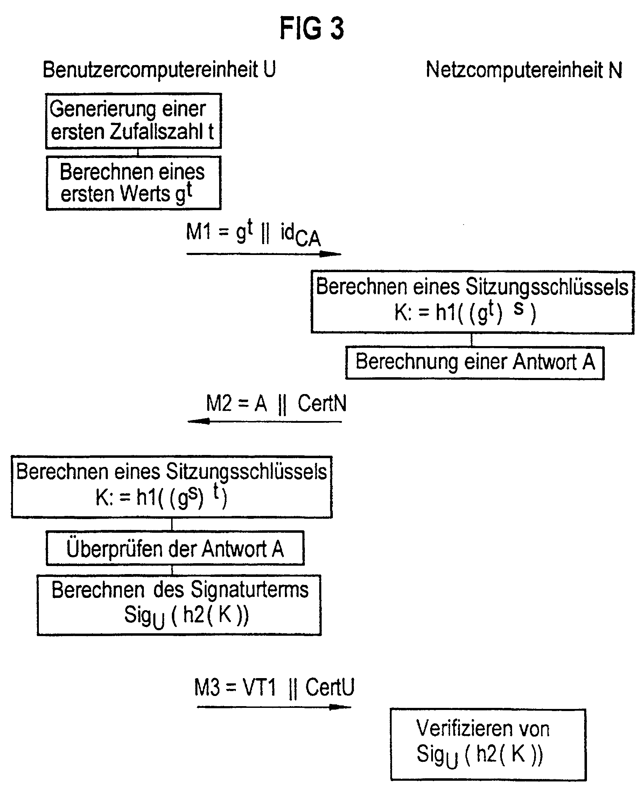

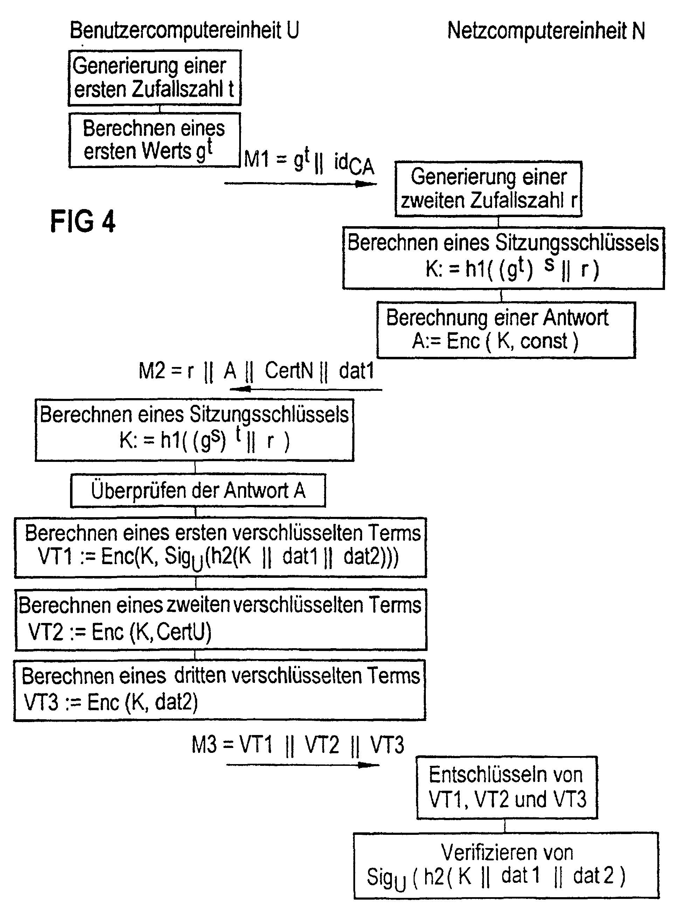

In den Figuren 3 und 4 sind durch zwei Skizzen der Ablauf eines zweiten Ausführungsbeispiels des erfindungsgemäßen Verfahrens dargestellt.

Für dieses Ausführungsbeispiel des Verfahrens wird vorausgesetzt, daß in der ersten Computereinheit U ein vertrauenswürdiger öffentlicher Benutzerschlüssel g^{u} der ersten Computereinheit U z. B. in Form eines Benutzerzertifikats CertU verfügbar gemacht wird und daß in der zweiten Computereinheit N ein vertrauenswürdiger öffentlicher Netzschlüssel g^{s} der zweiten Computereinheit N z. B. in Form eines Netzzertifikats CertN verfügbar gemacht wird. Der öffentliche Netzschlüssel g^{s} muß nicht in der ersten Computereinheit U verfügbar sein. Ebenso ist es nicht nötig, daß der öffentliche Benutzerschlüssel g^{u} in der zweiten Computereinheit N verfügbar ist.

In der ersten Computereinheit U wird eine erste Zufallszahl t generiert. Aus der ersten Zufallszahl t wird mit Hilfe des erzeugenden Elements g einer endlichen Gruppe in der ersten Computereinheit U ein erster Wert g^{t} gebildet.

Nach der Berechnung des ersten Werts g^{t} wird eine erste Nachricht M1 codiert, die mindestens den ersten Wert g^{t} und eine Identitätsangabe id_{CA} einer Zertifizierungs computereinheit CA, die das Netzzertifikat CertN liefert, das von der ersten Computereinheit U verifiziert werden kann, aufweist. Die erste Nachricht M1 wird von der ersten Computereinheit U an die zweite Computereinheit N übertragen.

In der zweiten Computereinheit N wird die erste Nachricht M1 decodiert. Die erste Nachricht M1 kann auch über einen unsicheren Kanal, also auch über eine Luftschnittstelle, unverschlüsselt übertragen werden, da die Logarithmierung des ersten Wertes g^{t} nicht in vertretbarer Zeit durchgeführt werden kann.

Wie in Figur 4 beschrieben, kann es vorgesehen sein, daß in der zweiten Computereinheit N eine zweite Zufallszahl r generiert wird. Durch diesen zusätzlichen Verfahrensschritt wird ein zusätzliches Sicherheitsziel realisiert: die Zusicherung der Frische (Aktualität) eines im folgenden beschriebenen Sitzungsschlüssels K für die zweite Computereinheit N.

In der zweiten Computereinheit N wird mit Hilfe einer ersten Hash-Funktion h1 ein Sitzungsschlüssel K gebildet. Als eine erste Eingangsgröße der ersten Hash-Funktion h1 wird ein erster Term verwendet. Der erste Term wird gebildet, indem der erste Wert g^{t} potenziert wird mit einem geheimen Netzschlüssel s.

Wenn die zweite Zufallszahl r verwendet wird, so weist die erste Eingangsgröße der ersten Hash-Funktion h1 zusätzlich mindestens die zweite Zufallszahl r auf. Nun wird in der zweiten Computereinheit N eine Antwort A gebildet. Zur Bildung der Antwort A sind verschiedene Varianten vorgesehen. Es ist z. B. möglich, daß mit dem Sitzungsschlüssel K unter Verwendung einer Verschlüsselungsfunktion Enc eine Konstante const verschlüsselt wird. Die Konstante const ist sowohl der ersten Computereinheit U als auch der zweiten Computereinheit N bekannt. Auch die Verschlüsselungsfunktion Enc ist sowohl der zweiten Computereinheit N als auch der ersten Computereinheit U als die in dem erfindungsgemäßen Verfahren zu verwendende Verschlüsselungsfunktion bekannt.

Eine weitere Möglichkeit, die Antwort A zu bilden liegt z. B. darin, daß der Sitzungsschlüssel K als Eingangsgröße für eine dritte Hash-Funktion h 3 verwendet wird und der "gehashte" Wert des Sitzungsschlüssels K als Antwort verwendet wird. Weitere Möglichkeiten, die Antwort A zu bilden, die zur Überprüfung des Sitzungsschlüssels K in der ersten Computereinheit U verwendet wird, sind dem Fachmann geläufig und können als Varianten zu den beschriebenen Vorgehensweisen verwendet werden.

Eine Aneinanderreihung der zweiten Zufallszahl r, des Netzzertifikats CertN, der Antwort A, sowie ein optionales erstes Datenfeld dat1 bilden eine zweite Nachricht M2. Die zweite Zufallszahl r und das optionale erste Datenfeld dat1 sind nur in der zweiten Nachricht M2 enthalten, wenn diese in dem erfindungsgemäßen Verfahren vorgesehen sind.

Die zweite Nachricht M2 wird in der zweiten Computereinheit N codiert und zu der ersten Computereinheit U übertragen.

In der ersten Computereinheit U wird die zweite Nachricht M2 decodiert, so daß die erste Computereinheit U eventuell die zweite Zufallszahl r, die Antwort A sowie eventuell das optionale erste Datenfeld dat1 zur Verfügung hat. Die Länge des optionalen ersten Datenfeldes dat1 kann beliebig groß sein, d. h. es ist auch möglich, daß das optionale erste Datenfeld dat1 nicht vorhanden ist.

Anschließend wird das in der zweiten Nachricht M2 enthaltene Netzzertifikat CertN in der ersten Computereinheit verifiziert. Somit steht der öffentliche Netzschlüssel g^{s} in der ersten Computereinheit U zur Verfügung.

In der ersten Computereinheit U wird nun ebenfalls der Sitzungsschlüssel K gebildet, mit Hilfe der ersten Hash-Funktion h1, die sowohl in der zweiten Computereinheit N als auch in der ersten Computereinheit U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation eines öffentlichen Netzschlüssels g^{s} mit der ersten Zufallszahl t. Wenn die Verwendung der zweiten Zufallszahl r in dem erfindungsgemäßen Verfahren vorgesehen wird, so weist die zweite Eingangsgröße der ersten Hash-Funktion h1 zur Bildung des Sitzungsschlüssels K in der ersten Computereinheit U zusätzlich die zweite Zufallszahl r auf.

Durch die Verwendung der ersten Zufallszahl t und der zweiten Zufallszahl r bei der Generierung des Sitzungsschlüssels K wird die Aktualität des Sitzungsschlüssels K gewährleistet, da jeweils die erste Zufallszahl t als auch die zweite Zufallszahl r nur für jeweils einen Sitzungsschlüssel K verwendet werden.

Somit wird eine Wiedereinspielung eines älteren Schlüssels als Sitzungsschlüssel K verhindert. Die Aktualität des Sitzungsschlüssels K ist auch bedeutend im Zusammenhang mit der Fragestellung, wie groß die erste Zufallszahl t sowie die zweite Zufallszahl r sein müssen. Dies wird deutlich, da eine geringere Länge der Zufallszahlen das DLP-Problem verringern, d. h. je kürzer die Zufallszahl ist, desto einfacher ist die Logarithmierung, also z. B. das Herausfinden der ersten Zufallszahl t aus dem ersten Wert g^{t}. Wenn aber für jeden neuen Sitzungsschlüssel K andere Zufallszahlen verwendet werden, so ist die Wahrscheinlichkeit, daß der verwendete Sitzungsschlüssel K von einem unbefugten Dritten schon herausgefunden wurde, wesentlich geringer. Damit ist die Gefahr, daß der Teil einer Nachricht, der mit dem Sitzungsschlüssel K verschlüsselt ist, von einem unbefugten Dritten entschlüsselt werden kann, erheblich reduziert.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt.

Abhängig von den im vorigen beschriebenen Varianten zur Bildung der Antwort A sind verschiedene Möglichkeiten vorgesehen, den Sitzungsschlüssel K anhand der Antwort A zu überprüfen.

Eine Möglichkeit besteht z. B. darin, daß, wenn die Antwort A in der zweiten Computereinheit N durch Verschlüsselung der Konstante const mit dem Sitzungsschlüssel K unter Verwendung der Verschlüsselungsfunktion Enc gebildet wurde, die Antwort A entschlüsselt wird, und somit die erste Computereinheit U eine entschlüsselte Konstante const erhält, die mit der bekannten Konstante const verglichen wird.

Die Überprüfung des Sitzungsschlüssels K anhand der Antwort A kann auch durchgeführt werden, indem die der ersten Computereinheit U bekannte Konstante const mit dem in der ersten Computereinheit U gebildeten Sitzungsschlüssel K unter Verwendung der Verschlüsselungsfunktion Enc verschlüsselt wird und das Ergebnis mit der Antwort A auf Übereinstimmung geprüft wird. Diese Vorgehensweise wird z. B. auch verwendet, wenn die Antwort A in der zweiten Computereinheit N gebildet wird, in dem auf den Sitzungsschlüssel K die dritte Hash-Funktion h3 angewendet wird. In diesem Fall wird in der ersten Computereinheit U der in der ersten Computereinheit U gebildete Sitzungsschlüssel K als Eingangsgröße der dritten Hash-Funktion h3 verwendet. Der "gehashte" Wert des in der ersten Computereinheit U gebildeten Sitzungsschlüssels K wird dann mit der Antwort A auf Übereinstimmung geprüft. Damit wird das Ziel der Schlüsselbestätigung des Sitzungsschlüssels K erreicht.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweite Computereinheit N durch die erste Computereinheit U authentifiziert. Dies wird erreicht, vorausgesetzt daß für die erste Computereinheit U bekannt ist, daß der öffentliche Netzschlüssel g^{s} tatsächlich zur zweiten Computereinheit N gehört.

Im Anschluß an die Bestätigung des Sitzungsschlüssels K durch Überprüfung der Antwort A wird ein Signaturterm berechnet. Hierzu wird mit Hilfe einer zweiten Hash-Funktion h2 eine vierte Eingangsgröße gebildet. Die zweite Hash-Funktion h2 kann, muß aber nicht dieselbe Hash-Funktion sein wie die erste Hash-Funktion h1. Als eine dritte Eingangsgröße für die zweite Hash-Funktion h2 wird ein Term verwendet, der mindestens den Sitzungsschlüssel K enthält. Weiterhin kann die dritte Eingangsgröße das optionale erste Datenfeld dat1 oder auch ein optionales zweites Datenfeld dat2 enthalten, wenn deren Verwendung in dem erfindungsgemäßen Verfahren vorgesehen wird.

Es kann später nicht abgestritten werden, daß die Daten, die im ersten optionale Datenfeld dat1 und im zweiten optionalen Datenfeld dat2 enthalten sind, von der ersten Computereinheit U gesendet werden.

Die in dem ersten optionalen Datenfeld dat1 und in dem zweiten optionalen Datenfeld dat2 enthaltenen Daten können z. B. Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Außerdem wird, falls das Sicherheitsziel "Anonymität des Benutzers" realisiert werden soll, ein zweiter verschlüsselter Term VT2 berechnet, in dem ein Benutzerzertifikat CertU der ersten Computereinheit U mit dem Sitzungschlüssel K mit Hilfe der Verschlüsselungsfunktion Enc verschlüsselt wird. Bei Verwendung eines optionalen zweiten Datenfeldes dat2 kann in der ersten Computereinheit U ein dritter verschlüsselter Term VT3 berechnet werden, indem das optionale zweite Datenfeld dat2 mit dem Sitzungsschlüssel K unter Verwendung der Verschlüsselungsfunktion Enc verschlüsselt wird. Das optionale zweite Datenfeld dat2 kann ebenso unverschlüselt übertragen werden.

In der ersten Computereinheit U wird eine dritte Nachricht M3 gebildet und codiert, die mindestens den Signaturterm und das Benutzerzertifikat CertU der ersten Computereinheit U aufweist. Falls die Benutzeranonymität der ersten Computereinheit U gewährleistet werden soll, weist die dritte Nachricht M3 anstatt des Benutzerzertifikats CertU der ersten Computereinheit U mindestens den zweiten verschlüsselten Term VT2 auf, der das Benutzerzertifikat CertU der ersten Computereinheit U in verschlüsselter Form enthält, die nur von der zweiten Computereinheit N entschlüsselt werden kann.

Wenn die Verwendung des optionalen zweiten Datenfelds dat2 vorgesehen wird, weist die dritte Nachricht M3 zusätzlich mindestens den dritten verschlüsselten Term VT 3 auf. Wenn die dritte Nachricht M3 den ersten verschlüsselten Term VT1, den zweiten verschlüsselten Term VT2 oder den dritten verschlüsselten Term VT3 aufweist, werden diese in der zweiten Computereinheit N entschlüsselt. Dies geschieht für den eventuell vorhandenen ersten verschlüsselten Term VT1 vor der Verifikation des Signaturterms.

Die dritte Nachricht M3 wird von der ersten Computereinheit U zu der zweiten Computereinheit N übertragen.

Zusätzlich wird die Authentifikation der ersten Computereinheit U gegenüber der zweiten Computereinheit N durch den Signaturterm gewährleistet, durch deren Verwendung garantiert wird, daß die dritte Nachricht M3 tatsächlich aktuell von der ersten Computereinheit U gesendet wurde.

Wenn für das erfindungsgemäße Verfahren temporäre Benutzeridentitäten vorgesehen werden, so wird das im vorigen beschriebene Verfahren um einige Verfahrensschritte erweitert.

In der zweiten Computereinheit N wird für die erste Computereinheit U eine neue temporäre Identitätsgröße TMUIN gebildet, die der ersten Computereinheit U im weiteren zugewiesen wid. Dies kann z. B. durch Generierung einer Zufallszahl oder durch Tabellen, in denen mögliche Identitätsgrößen abgespeichert sind, durchgeführt werden. Aus der neuen tempörären Identitätsgröße TMUIN der ersten Computereinheit U wird in der zweiten Computereinheit N ein vierter verschlüsselter Term VT4 gebildet, indem die neue temporäre Identitätsgröße TMUIN der ersten Computereinheit U mit dem Sitzungsschlüssel K unter Verwendung der Verschlüsselungsfunktion Enc verschlüsselt wird.

In diesem Fall weist die zweite Nachricht M2 zusätzlich mindestens den vierten verschlüsselten Term VT4 auf. Der vierte verschlüsselte Term VT4 wird dann in der ersten Computereinheit U entschlüsselt. Nun ist die neue temporäre Identitätsgröße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korrekt empfangen hat, weist die dritte Eingangsgröße für die erste Hash-Funktion h1 oder für die zweite Hash-Funktion h2 zusätzlich mindestens die neue temporäre Identitätsgröße TMUIN der ersten Computereinheit U auf.

Es ist auch möglich, die neue temporäre Identitätsgröße TMUIN nicht in den Signaturterm zu integrieren, sondern den zweiten verschlüsselten Term VT2 zu bilden, indem die neue temporäre Identitätsgröße TMUIN der ersten Computereinheit U mit dem Sitzungsschlüssel K unter Verwendung der Verschlüsselungsfunktion Enc verschlüsselt wird. In diesem Fall weist die dritte Nachricht M3 zusätzlich den zweiten verschlüsselten Term VT2 auf.

### Drittes Ausführungsbeispiel

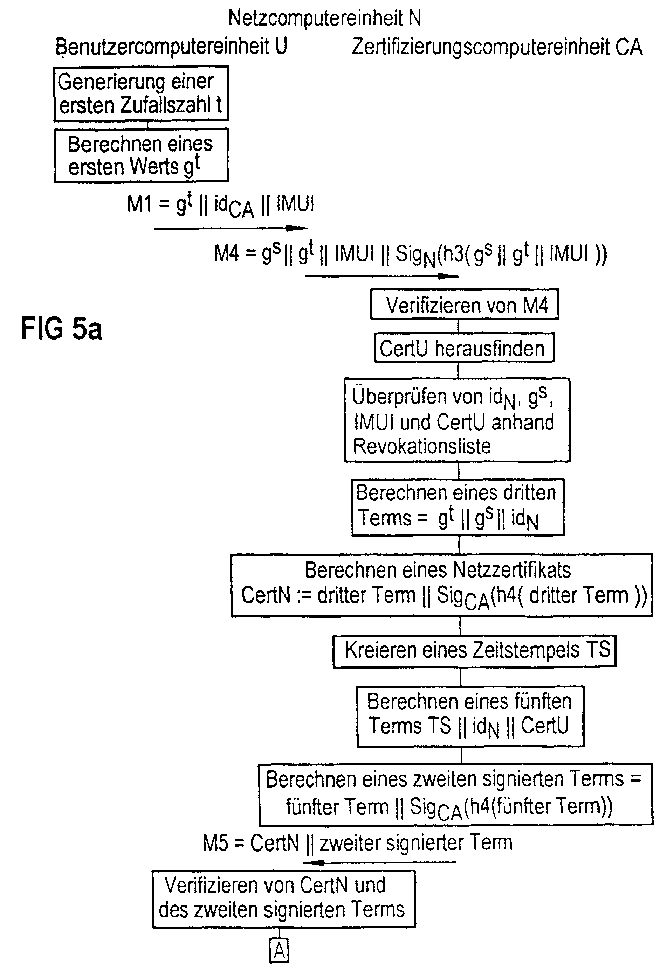

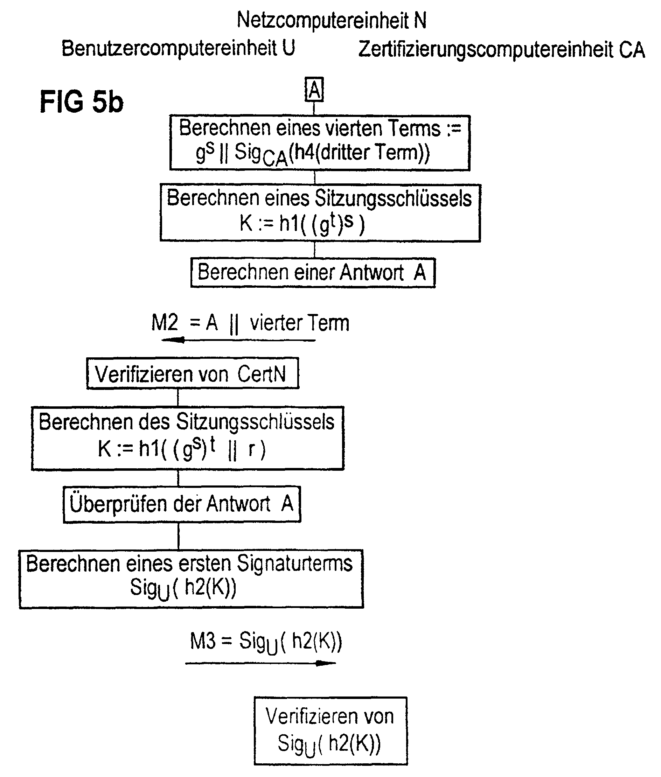

In den Figuren 5a, b sind durch zwei Skizzen der Ablauf eines dritten Ausführungsbeispiels dargestellt.

Für diese Weiterbildung des Verfahrens wird vorausgesetzt, daß in der ersten Computereinheit U kein vertrauenswürdiger öffentlicher Netzschlüssel g^{s} der zweiten Computereinheit N verfügbar ist. In der Benutzercomputerenheit U ist ein vertrauenswürdiger öffentlicher Zertifizierungsschlüssel g^{u} der Zertifizierungscomputereinheit CA verfügbar, wobei g ein erzeugendes Element einer endlichen Gruppe ist. Dies bedeutet, daß die erste Computereinheit U sich den vertrauenswürdigen öffentlichen Netzschlüssel g^{s} in Form eines Netzzertifikats CertN von einer Zertifizierungscomputereinheit CA "besorgen" muß. Ebenso braucht die zweiten Computereinheit N den vertrauenswürdigen öffentlichen Benutzerschüssel g^{u} in Form eines Benutzerzertifikats CertU von der Zertifizierungscomputereinheit CA.

In der ersten Computereinheit U wird eine erste Zufallszahl t generiert. Aus der ersten Zufallszahl t wird mit Hilfe des erzeugenden Elements g einer endlichen Gruppe in der ersten Computereinheit U ein erster Wert g^{t} gebildet.

Nach der Berechnung des ersten Werts g^{t} wird eine erste Nachricht M1 codiert, die mindestens den ersten Wert g^{t,} eine Identitätsgröße IMUI der ersten Computereinheit U und eine Identitätsgröße id_{CA} einer Zertifizierungscomputereinheit CA, die ein Netzzertifikat CertN liefert, das von der ersten Computereinheit U verifiziert werden kann, aufweist. Dies ist nötig, wenn mehrere Zertifizierungsinstanzen mit unterschiedlichen geheimen Zertifizierungsschlüsseln vorgesehen werden. Wenn das Sicherheitsziel der Benutzeranonymität realisiert werden soll, wird in der ersten Computereinheit U vor Bildung der ersten Nachricht M1 ein Zwischenschlüssel L gebildet. Dies geschieht durch Potenzierung des öffentlichen Zertifizierungsschlüssels g^{u} mit der ersten Zufallszahl t. Im weiteren wird in diesem Fall die Identitätsgröße IMUI der ersten Computereinheit U mit dem Zwischenschlüssel L unter Anwendung einer Verschlüsselungsfunktion Enc verschlüsselt und das Ergebnis stellt einen vierten verschlüsselten Term VT4 dar. Der vierte verschlüsselte Term VT4 wird anstatt der Identitätsgröße IMUI der ersten Computereinheit U in die erste Nachricht M1 integriert. Die erste Nachricht M1 wird von der ersten Computereinheit U an die zweiten Computereinheit N übertragen.

In der zweiten Computereinheit N wird die erste Nachricht M1 decodiert. Die erste Nachricht M1 kann auch über einen unsicheren Kanal, also auch über eine Luftschnittstelle, unverschlüsselt übertragen werden, da die Logarithmierung des ersten Wertes g^{t} nicht in vertretbarer Zeit durchgeführt werden kann.

In der zweiten Computereinheit N wird die erste Nachricht M1 decodiert, und eine vierte'Nachricht M4 gebildet, die eine Verkettung des der zweiten Computereinheit N bekannten öffentlichen Netzschlüssels g^{s}, dem ersten Wert g^{t} und der Identitätsgröße IMUI der ersten Computereinheit U, sowie einem ersten signierten Term aufweist. Der erste signierte Term wird gebildet durch Anwendung einer zweiten Signaturfunktion Sig_{N} auf einen ersten Signatureingangsterm. Der erste Signatureingangsterm weist mindestens ein Ergebnis einer dritten Hash-Funktion h3 auf, die auf mindestens eine Verkettung des öffentlichen Netzschlüssels g^{s}, des ersten Werts g^{t} und der Identitätsgröße IMUI der ersten Computereinheit U angewendet wird. In dem Fall, daß das Sicherheitsziel der Benutzeranonymität realisiert werden soll, wird in der vierten Nachricht M4 anstatt der Identitätsgröße IMUI der ersten Computereinheit U der vierte verschlüsselte Term VT4 codiert. In diesem Fall weist auch die Verkettung, auf die die dritte Hash-Funktion h3 angewendet wird, anstatt der Identitätsgröße IMUI der ersten Computereinheit U den vierten verschlüsselten Term VT4 auf.

Die zweite Signaturfunktion Sig_{N} kann, muß aber nicht gleich sein der ersten Signaturfunktion Sig_{U}.

Die vierte Nachricht M4 wird in der zweiten Computereinheit N codiert und anschließend an die Zertifizierungscomputereinheit CA übertragen.

In der Zertifizierungscomputereinheit CA wird die vierte Nachricht M4 decodiert und mit dem öffentlichen Schlüssel g^{s}, der der Zertifizierungscomputereinheit CA bekannt ist, verifiziert. Damit wird die zweiten Computereinheit N als Sender der vierten Nachricht M4 authentifiziert.

Anschließend wird, falls die Benutzeranonymität gewährleistet wird, also der vierte verschlüsselte Term VT4 in der vierten Nachricht M4 mitgesendet wurde, in der Zertifizierungscomputereinheit CA der Zwischenschlüssel L berechnet, indem der erste Wert g^{t} mit einem geheimen Zertifizierungsschlüssel u der Zertifizierungscomputereinheit CA potenziert wird.

Mit dem Zwischenschlüssel L wird unter Verwendung der Verschlüsselungsfunktion Enc der vierte verschlüsselte Term VT4 entschlüsselt, womit in der Zertifizierungscomputereinheit CA die Identitätsgröße IMUI der ersten Computereinheit U bekannt ist.

In der Zertifizierungscomputereinheit CA wird dann das Benutzerzertifikat CertU ermittelt. Das Benutzerzertifikat CertU kann z. B. aus einer der Zertifizierungscomputereinheit CA eigenen Datenbank ermittelt werden, die alle Zertifikate der Computereinheiten enthält, für die die Zertifizierungscomputereinheit CA Zertifikate erstellt.

Um die Gültigkeit des Netzzertifikats CertN und des Benutzerzertifikats CertU zu überprüfen, wird eine Identitatsangabe id_{N} und der in der vierten Nachricht mitgesendete öffentliche Netzschlüssel g^{s}, die Identitätsgröße IMUI der ersten Computereinheit U sowie das ermittelte Benutzerzertifikat CertU mit einer Revokationsliste verglichen, in der ungültige Zertifikate, Schlüssel oder Identitätsgrößen aufgeführt sind.

Anschließend wird aus mindestens einer Verkettung des ersten Werts g^{t}, des öffentlichen Netzschlüssels g^{s} und der Identitätsangabe id_{N} der zweiten Computereinheit N ein dritter Term gebildet.

Der dritte Term wird mit Hilfe einer vierten Hash-Funktion h4 "gehasht" und das Ergebnis der Hash-Funktion h4 wird unter Verwendung einer dritten Signaturfunktion Sig_{CA} signiert. Ein Netzzertifikat CertN wird nun in der Zertifizierungscomputereinheit CA gebildet, wobei das Netzzertifikat CertN mindestens den dritten Term und den signierten Hash-Wert des dritten Terms aufweist.

Weiterhin wird beispielsweise in der Zertifizierungscomputereinheit CA ein Zeitstempel TS kreiert.

In der Zertifizierungscomputereinheit CA wird außerdem ein fünfter Term gebildet, der mindestens eine Verkettung des Zeitstempels TS, der Identitätsangabe id_{N} der zweiten Computereinheit N und des Benutzerzertifikats CertU aufweist.

Ein zweiter signierter Term wird gebildet durch Anwendung der dritten Signaturfunktion Sig_{CA} auf einen zweiten Signatureingangsterm und den geheimen Zertifizierungsschlüssel u. Der zweite Signatureingangsterm weist mindestens ein Ergebnis der vierten Hash-Funktion h4 auf, die auf mindestens den fünften Term angewendet wird.

Anschließend wird ein sechster Term gebildet, der mindestens den fünften Term und den signierten Hash-Wert des fünften Terms aufweist.

Eine in der Zertifizierungscomputereinheit CA gebildete fünfte Nachricht M5 weist mindestens eine Verkettung aus dem Netzzertifikat CertN und dem sechsten Term auf.

Die fünfte Nachricht M5 wird in der Zertifizierungscomputereinheit CA codiert und an die zweite Computereinheit N übertragen. Nachdem die fünfte Nachricht in der zweiten Computereinheit N decodiert ist, wird das Netzzertifikat CertN und der zweite signierte Term verifiziert.

In der zweiten Computereinheit N wird nun ein vierter Term gebildet, der mindestens eine Verkettung des öffentlichen Netzschlüssels g^{s} und des signierten Hash-Werts des dritten Terms aufweist.

In der zweiten Computereinheit N wird mit Hilfe einer ersten Hash-Funktion h1 ein Sitzungsschlüssel K gebildet. Als eine erste Eingangsgröße der ersten Hash-Funktion h1 wird eine Konkatenation eines ersten Terms mit der zweiten Zufallszahl r verwendet. Der erste Term wird gebildet, indem der erste Wert g^{t} potenziert wird mit einem geheimen Netzschlüssel s. Unter einer Hash-Funktion ist in diesem Zusammenhang eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren wird für die Hash-Funktion in diesem Zusammenhang Kollisionsfreiheit gefordert, d. h. es darf nicht möglich sein, zwei verschiedene Eingangszeichenfolgen zu finden, die dieselbe Ausgangszeichenfolge ergeben. Die zweite Zufallszahl r findet Verwendung, wie in den Figuren 2a, b beschrieben, wenn das zusätzliche Sicherheitsziel der Zusicherung der Frische (Aktualität) des Sitzungsschlüssels K für die zweiten Computereinheit N realisiert werden soll. Ist dieses Sicherheitsziel nicht benötigt, wird die zweite Zufallszahl r nicht in dem erfindungsgemäßen Verfahren verwendet.

Nun wird in der zweiten Computereinheit N eine Antwort A gebildet. Zur Bildung der Antwort A sind verschiedene Varianten vorgesehen. So ist es z. B. möglich, daß mit dem Sitzungsschlüssel K unter Verwendung einer Verschlüsselungsfunktion Enc eine Konstante const verschlüsselt wird. Die Konstante const ist sowohl der ersten Computereinheit U als auch der zweiten Computereinheit N bekannt. Auch die Verschlüsselungsfunktion Enc ist sowohl der zweiten Computereinheit N als auch der ersten Computereinheit U als die in dem erfindungsgemäßen Verfahren zu verwendende Verschlüsselungsfunktion bekannt.

Eine weitere Möglichkeit, die Antwort A zu bilden liegt z. B. darin, daß der Sitzungsschlüssel K als Eingangsgröße für eine dritte Hash-Funktion h3 verwendet wird und der "gehashte" Wert des Sitzungsschlüssels K als Antwort A verwendet wird. Weitere Möglichkeiten, die Antwort A zu bilden, die zur Überprüfung des Sitzungsschlüssels K in der ersten Computereinheit U verwendet wird, sind dem Fachmann geläufig und können als Varianten zu den beschriebenen Vorgehensweisen verwendet werden.

Eine Aneinanderreihung der zweiten Zufallszahl r, des vierten Terms der Antwort A, sowie ein optionales erstes Datenfeld dat1 bilden eine zweite Nachricht M2. Die zweite Zufallszahl r und das optionale erste Datenfeld dat1 sind nur in der zweiten Nachricht M3 enthalten, wenn diese in dem erfindungsgemäßen Verfahren vorgesehen werden.

Die zweite Nachricht M2 wird in der zweiten Computereinheit N codiert und zu der ersten Computereinheit U übertragen.

In der ersten Computereinheit U wird die zweite Nachricht M2 decodiert, so daß die ersten Computereinheit U eventuell die zweite Zufallszahl r, die Antwort A sowie eventuell das optionale erste Datenfeld dat1 zur Verfügung hat. Die Länge des optionalen ersten Datenfeldes dat1 kann beliebig groß sein, d. h. es ist auch möglich, daß das optionale erste Datenfeld dat1 nicht vorhanden ist.

In der ersten Computereinheit U wird nun ebenfalls der Sitzungsschlüssel K gebildet, mit Hilfe der ersten Hash-Funktion h1, die sowohl der zweiten Computereinheit N als auch der ersten Computereinheit U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation eines öffentlichen Netzschlüssels g^{s} mit der ersten Zufallszahl t. Wenn die zweite Zufallszahl r in dem erfindungsgemäßen Verfahren vorgesehen wird, so weist die zweite Eingangsgröße der ersten Hash-Funktion h1 zur Bildung des Sitzungsschlüssels K in der ersten Computereinheit U zusätzlich die zweite Zufallszahl r auf.

Durch die Verwendung der ersten Zufallszahl t und der zweiten Zufallszahl r bei der Generierung des Sitzungsschlüssels K wird die Aktualität des Sitzungsschlüssels K gewährleistet, da jeweils die erste Zufallszahl t als auch die zweite Zufallszahl r nur für jeweils einen Sitzungsschlüssel K verwendet werden.

Somit wird eine Wiedereinspielung eines älteren Schlüssels als Sitzungsschlüssel K verhindert. Wenn aber für jeden neuen Sitzungsschlüssel K andere Zufallszahlen verwendet werden, so ist die Wahrscheinlichkeit, daß der verwendete Sitzungsschlüssel K von einem unbefugten Dritten schon herausgefunden wurde, wesentlich geringer. Damit ist die Gefahr, daß der Teil einer Nachricht, der mit dem Sitzungsschlüssel K verschlüsselt ist, von einem unbefugten Dritten entschlüsselt werden kann, erheblich reduziert.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt.

Abhängig von den im vorigen beschriebenen Varianten zur Bildung der Antwort A sind verschiedene Möglichkeiten vorgesehen, den Sitzungsschlüssel K anhand der Antwort A zu überprüfen.

Eine Möglichkeit besteht z. B. darin, daß, wenn die Antwort A in der zweiten Computereinheit N durch Verschlüsselung der Konstante const mit dem Sitzungsschlüssel K unter Verwendung der Verschlüsselungsfunktion Enc gebildet wurde, die Antwort A entschlüsselt wird, und somit die ersten Computereinheit U eine entschlüsselte Konstante const' erhält, die mit der bekannten Konstante const verglichen wird.

Die Überprüfung des Sitzungsschlüssels K anhand der Antwort A kann auch durchgeführt werden, indem die der ersten Computereinheit U bekannte Konstante const mit dem in der ersten Computereinheit U gebildeten Sitzungsschlüssel K unter Verwendung der Verschlüsselungsfunktion Enc verschlüsselt wird und das Ergebnis mit der Antwort A auf Übereinstimmung geprüft wird. Diese Vorgehensweise wird z. B. auch verwendet, wenn die Antwort A in der zweiten Computereinheit N gebildet wird, indem auf den Sitzungsschlüssel K die dritte Hash-Funktion h3 angewendet wird. In diesem Fall wird in der ersten Computereinheit U der in der ersten Computereinheit U gebildete Sitzungsschlüssel K als Eingangsgröße der dritten Hash-Funktion h3 verwendet. Der "gehashte" Wert des in der ersten Computereinheit U gebildeten Sitzungsschlüssel K wird dann mit der Antwort A auf Übereinstimmung geprüft. Damit wird das Ziel der Schlüsselbestätigung des Sitzungsschlüssels K erreicht.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweiten Computereinheit N durch die ersten Computereinheit U authentifiziert. Dies wird erreicht, vorausgesetzt daß für die ersten Computereinheit U bekannt ist, daß der öffentliche Netzschlüssel g^{s} tatsächlich zur zweiten Computereinheit N gehört.

Im Anschluß an die Bestätigung des Sitzungsschlüssels K durch Überprüfung der Antwort A wird ein Signaturterm berechnet. Hierzu wird mit Hilfe einer zweiten Hash-Funktion h2 eine vierte Eingangsgröße gebildet. Die zweite Hash-Funktion h2 kann, muß aber nicht dieselbe Hash-Funktion sein wie die erste Hash-Funktion h1. Als eine dritte Eingangsgröße für die zweite Hash-Funktion h2 wird ein Term verwendet, der mindestens den Sitzungsschlüssel K enthält. Weiterhin kann die dritte Eingangsgröße das optionale erste Datenfeld dat1 oder auch ein optionales zweites Datenfeld dat2 enthalten, wenn deren Verwendung in dem erfindungsgemäßen Verfahren vorgesehen wird.

Es kann später nicht abgestritten werden, daß die Daten, die im ersten optionale Datenfeld dat1 und im zweiten optionalen Datenfeld dat2 enthalten sind, von der ersten Computereinheit U gesendet werden.

Die in dem ersten optionalen Datenfeld dat1 und in dem zweiten optionalen Datenfeld dat2 enthaltenen Daten können z. B. Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Bei Verwendung eines optionalen zweiten Datenfeldes dat2 wird in der ersten Computereinheit U ein dritter verschlüsselter Term VT3 berechnet, indem das optionale zweite Datenfeld dat2 mit dem Sitzungsschlüssel K unter Verwendung der Verschlüsselungsfunktion Enc verschlüsselt wird. Das optionale zweite Datenfeld dat2 kann auch unverschlüsselt, also im Klartext übertragen werden.

In der ersten Computereinheit U wird eine dritte Nachricht M3 gebildet und codiert, die mindestens aus dem ersten verschlüsselten Term VT1, und, wenn das optionale zweite Datenfeld dat2 verwendet wird, dem dritten verschlüsselten Term VT3 oder dem optionalen zweiten Datenfeld dat2 im Klartext besteht. Die dritte Nachricht M3 wird von der ersten Computereinheit U zu der zweiten Computereinheit N übertragen.

Zusätzlich wird die Authentifikation der ersten Computereinheit U gegenüber der zweiten Computereinheit N durch den Signaturterm in der dritten Nachricht M3 gewährleistet, durch deren Verwendung auch garantiert wird, daß die dritte Nachricht M3 tatsächlich aktuell von der ersten Computereinheit U gesendet wurde.

In der zweiten Computereinheit N wird die dritte Nachricht M3 decodiert und anschließend wird der erste verschlüsselte Term VT1 sowie eventuell der dritte verschlüsselte Term VT3 entschlüsselt. Anhand des Benuterzertifikats CertU, das der zweiten Computereinheit N zur Verfügung steht, wird der Signaturterm verifiziert.

Wenn die Verwendung des optionalen zweiten Datenfelds dat2 vorgesehen wird, weist die dritte Nachricht M3 zusätzlich mindestens den dritten verschlüsselten Term VT3 auf oder das optionale zweite Datenfeld dat2 in Klartext, wenn das optionale zweite Datenfeld dat2 in Klartext übertragen werden soll.

Wenn die dritte Nachricht M3 den ersten verschlüsselten Term VT1, den zweiten verschlüsselten Term VT2 oder den dritten verschlüsselten Term VT3 aufweist, werden diese in der zweiten Computereinheit N entschlüsselt. Dies geschieht für den eventuell vorhandenen ersten verschlüsselten Term VT1 vor der Verifikation des Signaturterms.

Wenn für das erfindungsgemäße Verfahren temporäre Benutzeridentitäten vorgesehen werden, so wird das im vorigen beschriebene Verfahren um einige Verfahrensschritte erweitert.

In der zweiten Computereinheit N wird für die erste Computereinheit U eine neue temporäre Identitätsgröße TMUIN gebildet, die der ersten Computereinheit U im weiteren zugewiesen wird. Dies kann z. B. durch Generierung einer Zufallszahl oder durch Tabellen, in denen mögliche Identitätsgrößen abgespeichert sind, durchgeführt werden. Aus der neuen temporären Identitätsgröße TMUIN der ersten Computereinheit U wird in der zweiten Computereinheit N ein vierter verschlüsselter Term VT4 gebildet, indem die neue temporäre Identitätsgröße TMUIN der ersten Computereinheit U mit dem Sitzungsschlüssel K unter Verwendung der Verschlüsselungsfunktion Enc verschlüsselt wird.

In diesem Fall weist die zweite Nachricht M2 zusätzlich mindestens den vierten verschlüsselten Term VT4 auf. Der vierte verschlüsselte Term VT4 wird dann in der ersten Computereinheit U entschlüsselt. Nun ist die neue temporäre Identitätsgröße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korrekt empfangen hat, weist die dritte Eingangsgröße für die erste Hash-Funktion h1 oder für die zweite Hash-Funktion h2 zusätzlich mindestens die neue temporäre Identitätsgröße TMUIN der ersten Computereinheit U auf.

## Patentansprüche

1. Verfahren zum rechnergestützten Austausch kryptographischer Schlüssel zwischen einer ersten Computereinheit (U) und einer zweiten Computereinheit (N),
- bei dem aus einer ersten'Zufallszahl (t) mit Hilfe eines erzeugenden Elements (g) einer endlichen Gruppe in der ersten Computereinheit (U) ein erster Wert (g^{t}) gebildet wird,
- bei dem eine erste Nachricht (M1) von der ersten Computereinheit (U) an die zweite Computereinheit (N) übertragen wird, wobei die erste Nachricht (M1) mindestens den ersten Wert (g^{t}) aufweist,
- bei dem in der zweiten Computereinheit (N) ein Sitzungsschlüssel (K) mit Hilfe einer ersten Hash-Funktion (h1) gebildet wird, wobei eine erste Eingangsgröße der ersten Hash-Funktion (h1) mindestens einen ersten Term aufweist, der gebildet wird durch eine Exponentiation des ersten Werts (g^{t}) mit einem geheimen Netzschlüssel (s),
- bei dem in der ersten Computereinheit (U) der Sitzungsschlüssel (K) gebildet wird mit Hilfe der ersten Hash-Funktion (h1), wobei eine zweite Eingangsgröße der ersten Hash-Funktion (h1) mindestens einen zweiten Term aufweist, der gebildet wird durch eine Exponentiation eines öffentlichen Netzschlüssels (g^{s}) mit der ersten Zufallszahl (t),
- bei dem in der ersten Computereinheit (U) mit Hilfe einer zweiten Hash-Funktion (h2) oder der ersten Hash-Funktion (h1) eine vierte Eingangsgröße gebildet wird, wobei eine dritte Eingangsgröße für die erste Hash-Funktion (h1) oder für die zweite Hash-Funktion (h2) zur Bildung der vierten Eingangsgröße mindestens den Sitzungsschlüssel (K) aufweist,
- bei dem in der ersten Computereinheit (U) ein Signaturterm aus mindestens der vierten Eingangsgröße gebildet wird unter Anwendung einer ersten Signaturfunktion (Sig_{U}),
- bei dem eine dritte Nachricht (M3) von der ersten Computereinheit (U) an die zweite Computereinheit (N) übertragen wird, wobei die dritte Nachricht (M3) mindestens den Signaturterm der ersten Computereinheit (U) aufweist, und
- bei dem in der zweiten Computereinheit (N) der Signaturterm verifiziert wird.

2. Verfahren nach Anspruch 1,
- bei dem die erste Nachricht (M1) zusätzlich eine Identitätsangabe (id_{CA}) einer Zertifizierungscomputereinheit (CA), die ein Netzzertifikat (CertN) liefert, das von der ersten Computereinheit (U) verifiziert werden kann, aufweist,
- bei dem eine zweite Nachricht (M2) von der zweiten Computereinheit (N) an die erste Computereinheit (U) übertragen wird, wobei die zweite Nachricht (M2) mindestens das Netzzertifikat (CertN) aufweist, und
- bei dem in der ersten Computereinheit (U) das Netzzertifikat (CertN) verifiziert wird.

3. Verfahren nach Anspruch 2,
- bei dem die dritte Nachricht (M3) von der ersten Computereinheit (U) an die zweite Computereinheit (N) übertragen wird, wobei die dritte Nachricht (M3) zusätzlich ein Benutzerzertifikat (CertU) aufweist,
- bei dem in der zweiten Computereinheit (N) das Benutzerzertifikat (CertU) verifiziert wird.

4. Verfahren nach Anspruch 1,
- bei dem die erste Nachricht (M1) zusätzlich eine Identitätsgröße (IMUI) der ersten Computereinheit (U) und eine Identitätsangabe (id_{CA}) einer Zertifizierungscomputereinheit (CA), die der ersten Computereinheit (U) ein Netzzertifikat (CertN) liefert, das von der ersten Computereinheit (U) verifiziert werden kann, aufweist,
- bei dem eine vierte Nachricht (M4) von der zweiten Computereinheit (N) an die Zertifizierungscomputereinheit (CA) übertragen wird, wobei die vierte Nachricht (M4) mindestens den öffentlichen Netzschlüssel (g^{s}), den ersten Wert (g^{t}), die Identitätsgröße (IMUI) der ersten Computereinheit (U) als Eingangsgröße aufweist und wobei eine Ausgangsgröße einer dritten Hash-Funktion (h3) unter Verwendung einer zweiten Signaturfunktion (Sig_{N}) signiert wird,
- bei dem in der Zertifizierungscomputereinheit (CA) der erste signierte Term verifiziert wird,
- bei dem in der Zertifizierungscomputereinheit (CA) ein dritter Term gebildet wird, der mindestens den ersten Wert (g^{t}), den öffentlichen Netzschlüssel (g^{s}) und eine Identitätsangabe (id_{N}) der zweiten Computereinheit (N) aufweist,
- bei dem in der Zertifizierungscomputereinheit (CA) unter Verwendung einer vierten Hash-Funktion (h4) ein Hash-Wert über den dritten Term gebildet wird,
- bei dem in der Zertifizierungscomputereinheit (CA) der Hash-Wert über den dritten Term unter Verwendung einer dritten Signaturfunktion (Sig_{CA}) mit einem geheimen Zertifizierungsschlüssel (U) signiert wird,
- bei dem in der Zertifizierungscomputereinheit (CA) ein Netzzertifikat (CertN) gebildet wird, das mindestens den dritten Term und den signierten Hash-Wert des dritten Terms aufweist,
- bei dem in der Zertifizierungscomputereinheit (CA) auf einen fünften Term der mindestens die Identitätsangabe (id_{N}) der zweiten Computereinheit (N) und ein Benutzerzertifikat (CertU) aufweist, eine vierte Hash-Funktion (h4) angewendet wird,
- bei dem der Hash-Wert des fünften Terms durch Verwendung der dritten Signaturfunktion (Sig_{CA}) mit dem geheimen Zertifizierungsschlüssel (cs) signiert und das Ergebnis den zweiten signierten Term darstellt,
- bei dem eine fünfte Nachricht (M5), die mindestens das Netzzertifikat (CertN), den fünften Term und den zweiten signierten Term aufweist, von der Zertifizierungscomputereinheit (CA) zu der zweiten Computereinheit (N) übertragen wird,
- bei dem in der zweiten Computereinheit (N) das Netzzertifikat (CertN) und der zweite signierte Term verifiziert werden,
- bei dem in der zweiten Computereinheit (N) ein vierter Term, der mindestens den öffentlichen Netzschlüssel (g^{s}) und den signierten Hash-Wert des dritten Terms aufweist, gebildet wird,
- bei dem eine zweite Nachricht (M2) von der zweiten Computereinheit (N) an die erste Computereinheit (U) übertragen wird, wobei die zweite Nachricht (M2) mindestens den vierten Term aufweist, und
- bei dem in der ersten Computereinheit (U) das Netzzertifikat (CertN) verifiziert wird.

5. Verfahren nach Anspruch 4,
bei dem der fünfte Term zusätzlich einen Zeitstempel (TS) aufweist.

6. Verfahren nach Anspruch 4 oder 5,
- bei dem in der ersten Computereinheit (U) vor Bildung der ersten Nachricht (M1) ein Zwischenschlüssel (L) gebildet wird, indem ein öffentlicher Zertifizierungsschlüssel (g^{u}) mit der ersten Zufallszahl (t) potenziert wird,
- bei dem in der ersten Computereinheit (U) vor Bildung der ersten Nachricht (M1) aus der Identitätsgröße (IMUI) der ersten Computereinheit (U) ein zweiter verschlüsselter Term (VT2) gebildet wird, indem die Identitätsgröße (IMUI) mit dem Zwischenschlüssel (L) unter Anwendung einer Verschlüsselungsfunktion (Enc) verschlüsselt wird,
- bei dem die erste Nachricht (M1) anstatt der Identitätsgröße (IMUI) der ersten Computereinheit(U) den zweiten verschlüsselten Term (VT2) aufweist,
- bei dem die vierte Nachricht (M4) anstatt der Identitätsgröße (IMUI) der ersten Computereinheit (U) den zweiten verschlüsselten Term (VT2) aufweist, und
- bei dem in der Zertifizierungscomputereinheit (CA), nachdem die vierte Nachricht (M4) empfangen wurde, der zweite verschlüsselte Term (VT2) entschlüsselt wird.

7. Verfahren nach einem der Ansprüche 4 bis 6,
bei dem in der Zertifizierungscomputereinheit (CA) mindestens eine der Größen, die Identitätsangabe (id_{N}) der zweiten Computereinheit (N), die Identitätsgröße (|MU|) der ersten Computereinheit (U), der öffentliche Netzschlüssel (g^{s}) oder das Benutzerzertifikat (CertU) anhand einer Revokationsliste überprüft wird.

8. Verfahren nach einem der Ansprüche 1 bis 7,
- bei dem die erste Nachricht (M1) zusätzlich mindestens eine alte temporäre Identitätsgröße (TMUIO) der ersten Computereinheit (U) aufweist,
- bei dem in der zweiten Computereinheit (N), nach dem die ersten Nachricht (M1) empfangen wurde und bevor die zweite Nachricht (M2) gebildet wird, für die erste Computereinheit (U) eine neue temporäre Identitätsgröße (TMUIN) gebildet wird,
- bei dem aus der neuen temporären Identitätsgröße (TMUIN) der ersten Computereinheit (U) ein vierter verschlüsselter Term (VT4) gebildet wird, in dem die neue temporäre Identitätsgröße (TMUIN) der ersten Computereinheit (U) mit dem Sitzungschlüssel (K) unter Anwendung der Verschlüsselungsfunktion (Enc) verschlüsselt wird,
- bei dem die zweite Nachricht (M2) zusätzlich mindestens den vierten verschlüsselten Term (VT4) aufweist,
- bei dem in der ersten Computereinheit (U), nachdem die zweite Nachricht (M2) empfangen wurde und bevor die vierte Eingangsgröße gebildet wird, der vierte verschlüsselte Term (VT4) entschlüsselt wird,
- bei dem die dritte Eingangsgröße für die erste Hash-Funktion (h1) oder für die zweite Hash-Funktion (h2) zur Bildung der vierten Eingangsgröße zusätzlich mindestens die neue temporäre Identitätsgröße (TMUIN) der ersten Computereinheit (U) aufweist, und
- bei dem die dritte Nachricht (M3) nicht die Identitätsgröße (IMUI) der ersten Computereinheit (U) aufweist.

9. Verfahren nach einem der Ansprüche 1 bis 8,
- bei dem in der zweiten Computereinheit (N) eine Information zu dem Sitzungsschlüssel (K) enthaltende Antwort (A) gebildet wird,
- bei dem eine zweite Nachricht (M2) von der zweite Computereinheit (N) an die erste Computereinheit (U) übertragen wird, wobei die zweite Nachricht (M2) mindestens die Antwort (A) aufweist, und
- bei dem in der ersten Computereinheit (U) der Sitzungsschlüssel (K) anhand der Antwort (A) überprüft wird.

10. Verfahren nach Anspruch 9,
bei dem die dritte Nachricht (M3) zusätzlich eine Identitätsgröße (IMUI) der ersten Computereinheit aufweist.

11. Verfahren nach einem der Ansprüche 1 bis 10,
- bei dem in der zweiten Computereinheit (N) die erste Eingangsgröße der ersten Hash-Funktion (h1) zusätzlich mindestens eine zweite Zufallszahl (r) aufweist,
- bei dem die zweite Nachricht (M2) zusätzlich die zweite Zufallszahl (r) aufweist, und
- bei dem in der ersten Computereinheit (U) die zweite Eingangsgröße der ersten Hash-Funktion (h1) zusätzlich mindestens die zweite Zufallszahl (r) aufweist.

12. Verfahren nach einem der Anschlüsse 1 bis 5,
- bei dem in der ersten Computereinheit (U) vor Bildung der dritten Nachricht (M3) aus der Identitätsgröße (IMUI) der ersten Computereinheit (U) ein zweiter verschlüsselter Term (VT2) gebildet wird, in dem die Identitätsgröße (IMUI) mit dem Sitzungsschlüssel (K) unter Anwendung der Verschlüsselungsfunktion (Enc) verschlüsselt wird,
- bei dem die dritte Nachricht (M3) zusätzlich den zweiten verschlüsselten Term (VT2) aufweist, und
- bei dem in der zweiten Computereinheit (N), nachdem die dritte Nachricht (M3) empfangen wurde, der zweite verschlüsselte Term (VT2) entschlüsselt wird.

13. Verfahren nach einem der Ansprüche 1 bis 12,
- bei dem die zweite Nachricht (M2) zusätzlich ein optionales erstes Datenfeld (dat1) aufweist und
- bei dem die dritte Eingangsgröße für die erste Hash-Funktion (h1) oder für die zweite Hash-Funktion (h2) zur Bildung der vierten Eingangsgröße zusätzlich mindestens das optionale erste Datenfeld (dat1) aufweist.

14. Verfahren nach einem der Ansprüche 1 bis 13,
- bei dem in der ersten Computereinheit (U) vor Bildung der dritten Nachricht (M3) ein dritter verschlüsselter Term (VT3) gebildet wird, indem ein optionales zweites Datenfeld (dat2) mit dem Sitzungsschlüssel (K) unter Anwendung der Verschlüsselungsfunktion (Enc) verschlüsselt wird,
- bei dem die dritte Nachricht (M3) zusätzlich mindestens den dritten verschlüsselten Term (VT3) aufweist, und
- bei dem in der zweiten Computereinheit (N), nachdem die dritte Nachricht (M3) empfangen wurde, der dritte verschlüsselte Term (VT3) entschlüsselt wird.

15. Verfahren nach einem der Ansprüche 1 bis 14,
- bei dem in der ersten Computereinheit (U) vor Bildung der dritten Nachricht (M3) ein erster verschlüsselter Term (VT1) gebildet wird, indem der Signaturterm mit dem Sitzungsschlüssel (K) unter Anwendung der Verschlüsselungsfunktion (Enc) verschlüsselt wird,
- bei dem die dritte Nachricht (M3) zusätzlich den ersten verschlüsselten Term (VT1) aufweist, und
- bei dem in der zweiten Computereinheit (N), nachdem die dritte Nachricht (M3) empfangen wurde und bevor der Signaturterm verifiziert wird, der erste verschlüsselte Term (VT1) entschlüsselt wird.

16. Verfahren nach einem der Ansprüche 1 bis 15,
bei dem in der zweiten Computereinheit (N) eine Antwort (A) gebildet wird, indem eine Konstante (const), die in der zweiten Computereinheit (N) und in der ersten Computereinheit (U) bekannt sind, mit dem Sitzungsschlüssel (K) unter Anwendung der Verschlüsselungsfunktion (Enc) verschlüsselt wird.

17. Verfahren nach einem der Ansprüche 1 bis 16,
- bei dem in der zweiten Computereinheit (N) eine Antwort (A) gebildet wird, indem auf den Sitzungsschlüssel (K) eine dritte Hash-Funktion (h3) angewendet wird, und
- bei dem in der ersten Computereinheit (U) die Antwort (A) überprüft wird, indem auf den Sitzungsschlüssel (K) die dritte Hash-Funktion (h3) angewendet wird, und das Ergebnis mit der Antwort (A) verglichen wird.

18. Verfahren nach einem der Ansprüche 9 bis 15 oder 17,
bei dem in der ersten Computereinheit (U) die Antwort (A) überprüft wird, indem eine Konstante (const) mit dem Sitzungsschlüssel (K) unter Anwendung der Verschlüsselungsfunktion (Enc) verschlüsselt wird und das Ergebnis mit der Antwort (A) verglichen wird.

19. Verfahren nach einem der Ansprüche 9 bis 15 oder 17,
bei dem in der ersten Computereinheit (U) die Antwort (A) überprüft wird, indem die Antwort (A) mit dem Sitzungsschlüssel (K) unter Anwendung der Verschlüsselungsfunktion (Enc) entschlüsselt wird und eine entschlüsselte Konstante (const') mit einer Konstante (const) verglichen wird.

20. Verfahren nach einem der Ansprüche 1 bis 19,
bei dem die dritte Nachricht (M3) zusätzlich mindestens ein optionales zweites Datenfeld (dat2) aufweist.

21. Verfahren nach einem der Ansprüche 1 bis 20,
bei dem die erste Computereinheit (U) durch ein mobiles Kommunikationsendgerät und/oder die zweite Computereinheit (N) durch eine Authentifizierungseinheit in einem Mobil-Kommunikationsnetz gebildet werden.

## Claims

1. Method for the computer-aided interchange of cryptographic keys between a first computer unit (U) and a second computer unit (N),
- in which a first value (g^{t}) is formed from a first random number (t) using a generating element (g) of a finite group in the first computer unit (U),
- in which a first message (M1) is transmitted from the first computer unit (U) to the second computer unit (N), the first message (M1) containing at least the first value (g^{t}),
- in which a session key (K) is formed in the second computer unit (N) using a first hash function (h1), a first input variable for the first hash function (h1) containing at least one first term which is formed by exponentiation of the first value (g^{t}) using a secret network key (s),
- in which the session key (K) is formed in the first computer unit (U) using the first hash function (h1), a second input variable for the first hash function (h1) containing at least one second term which is formed by exponentiation of a public network key (g^{s}) using the first random number (t),
- in which a fourth input variable is formed in the first computer unit (U) using a second hash function (h2) or the first hash function (h1), a third input variable for the first hash function (h1) or for the second hash function (h2) containing, for the purpose of forming the fourth input variable, at least the session key (K),
- in which a signature term is formed in the first computer unit (U) from at least the fourth input variable using a first signature function (Sig_{U}),
- in which a third message (M3) is transmitted from the first computer unit (U) to the second computer unit (N), the third message (M3) containing at least the signature term from the first computer unit (U), and
- in which the signature term is verified in the second computer unit (N).

2. Method according to Claim 1,
- in which the first message (M1) additionally contains an identity statement (id_{CA}) for a certification computer unit (CA) which delivers a network certificate (CertN), which can be verified by the first computer unit (U),
- in which a second message (M2) is transmitted from the second computer unit (N) to the first computer unit (U), the second message (M2) containing at least the network certificate (CertN), and
- in which the network certificate (CertN) is verified in the first computer unit (U).

3. Method according to Claim 2,
- in which the third message (M3) is transmitted from the first computer unit (U) to the second computer unit (N), the third message (M3) additionally containing a user certificate (CertU),
- in which the user certificate (CertU) is verified in the second computer unit (N).

4. Method according to Claim 1,
- in which the first message (M1) additionally contains an identity variable (IMUI) for the first computer unit (U) and an identity statement (id_{CA}) for a certification computer unit (CA) which delivers to the first computer unit (U) a network certificate (CertN) which can be verified by the first computer unit (U),
- in which a fourth message (M4) is transmitted from the second computer unit (N) to the certification computer unit (CA), the fourth message (M4) containing at least the public network key (g^{s}), the first value (g^{t}), the identity variable (IMUI) for the first computer unit (U) as input variable, and an output variable from a third hash function (h3) being signed using a second signature function (Sig_{N}),
- in which the first signed term is verified in the certification computer unit (CA),
- in which a third term, containing at least the first value (g^{t}), the public network key (g^{s}) and an identity statement (id_{N}) for the second computer unit (N), is formed in the certification computer unit (CA),
- in which a hash value for the third term is formed in the certification computer unit (CA) using a fourth hash function (h4),
- in which the hash value for the third term is signed in the certification computer unit (CA) using a third signature function (Sig_{CA}) with a secret certification key (CS),
- in which a network certificate (CertN) containing at least the third term and the signed hash value for the third term is formed in the certification computer unit (CA),
- in which a fourth hash function (h4) is applied in the certification computer unit (CA) to a fifth term, containing at least the identity statement (id_{N}) for the second computer unit (N) and a user certificate (CertU),
- in which the hash value for the fifth term is signed using the secret certification key (cs) by using the third signature function (Sig_{CA}), and the result represents the second signed term,
- in which a fifth message (M5), containing at least the network certificate (CertN), the fifth term and the second signed term, is transmitted from the certification computer unit (CA) to the second computer unit (N),
- in which the network certificate (CertN) and the second signed term are verified in the second computer unit (N),
- in which a fourth term, containing at least the public network key (g^{s}) and the signed hash value for the third term, is formed in the second computer unit (N),
- in which a second message (M2) is transmitted from the second computer unit (N) to the first computer unit (U), the second message (M2) containing at least the fourth term, and
- in which the network certificate (CertN) is verified in the first computer unit (U).

5. Method according to Claim 4,
in which the fifth term additionally has a time stamp (TS).

6. Method according to Claim 4 or 5,
- in which an intermediate key (L) is formed in the first computer unit (U), before formation of the first message (M1), by raising a public key declaration key (g^{u}) to a higher power using the first random number (t),
- in which a second encrypted term (VT2) is formed in the first computer unit (U), before formation of the first message (M1), from the identity variable (IMUI) for the first computer unit (U) by encrypting the identity variable (IMUI) with the intermediate key (L) using an encryption function (Enc),
- in which the first message (M1) contains the second encrypted term (VT2) instead of the identity variable (IMUI) for the first computer unit (U),
- in which the fourth message (M4) contains the second encrypted term (VT2) instead of the identity variable (IMUI) for the first computer unit (U), and
- in which the second encrypted term (VT2) is decrypted in the certfication computer unit (CA), afer the fourth message (M4) has been received.

7. Method according to one of Claims 4 to 6,
in which at least one of the variables, the identity statement (id_{N}) for the second computer unit (N), the identity variable (IMUI) for the first computer unit (U), the public network key (g^{s}) or the user certificate (CertU) is checked in the certification computer unit (CA) using a revocation list.

8. Method according to one of Claims 1 to 7,
- in which the first message (M1) additionally contains at least one old temporary identity variable (TMUIO) for the first computer unit (U),
- in which a new temporary identity variable (TMUIN) is formed for the first computer unit (U) in the second computer unit (N) after the first message (M1) has been received and before the second message (M2) is formed,
- in which a fourth encrypted term (VT4) is formed from the new temporary identity variable (TMUIN) for the first computer unit (U) by encrypting the new temporary identity variable (TMUIN) for the first computer unit (U) with the session key (K) using the encryption function (Enc),
- in which the second message (M2) additionally contains at least the fourth encrypted term (VT4),
- in which the fourth encrypted term (VT4) is decrypted in the first computer unit (U) after the second message (M2) has been received and before the fourth input variable is formed,
- in which the third input variable for the first hash function (h1) or for the second hash function (h2) additionally contains at least the new temporary identity variable (TMUIN) for the first computer unit (U) for the purpose of forming the fourth input variable, and
- in which the third message (M3) does not contain the identity variable (IMUI) for the first computer unit (U).

9. Method according to one of Claims 1 to 8,
- in which a response (A) containing information about the session key (K) is formed in the second computer unit (N),
- in which a second message (M2) is transmitted from the second computer unit (N) to the first computer unit (U), the second message (M2) containing at least the response (A), and
- in which the session key (K) is checked in the first computer unit (U) using the response (A).

10. Method according to Claim 9,
in which the third message (M3) additionally contains an identity variable (IMUI) for the first computer unit.

11. Method according to one of Claims 1 to 10,
- in which the first input variable for the first hash function (h1) additionally contains at least one second random number (r) in the second computer unit (N),
- in which the second message (M2) additionally contains the second random number (r), and
- in which the second input variable for the first hash function (h1) additionally contains at least the second random number (r) in the first computer unit (U).

12. Method according to one of Claims 1 to 5,
- in which a second encrypted term (VT2) is formed in the first computer unit (U), before formation of the third message (M3), from the identity variable (IMUI) for the first computer unit (U) by encrypting the identity variable (IMUI) with the session key (K) using the encryption function (Enc),
- in which the third message (M3) additionally contains the second encrypted term (VT2), and
- in which the second encrypted term (VT2) is decrypted in the second computer unit (N) after the third message (M3) has been received.

13. Method according to one of Claims 1 to 12,
- in which the second message (M2) additionally contains an optional first data field (dat1), and
- in which the third input variable for the first hash function (h1) or for the second hash function (h2) additionally contains at least the optional first data field (dat1) for the purpose of forming the fourth input variable.

14. Method according to one of Claims 1 to 13,
- in which a third encrypted term (VT3) is formed in the first computer unit (U), before formation of the third message (M3), by encrypting one optional second data field (dat2) with the session key (K) using the encryption function (Enc),
- in which the third message (M3) additionally contains at least the third encrypted term (VT3), and
- in which the third encrypted term (VT3) is decrypted in the second computer unit (N) after the third message (M3) has been received.

15. Method according to one of Claims 1 to 14,
- in which a first encrypted term (VT1) is formed in the first computer unit (U), before formation of the third message (M3), by encrypting the signature term with the session key (K)using the encryption function (Enc),
- in which the third message (M3) additionally contains the first encrypted term (VT1), and
- in which the first encrypted term (VT1) is decrypted in the second computer unit (N) after the third message (M3) has been received and before the signal term is verified.

16. Method according to one of Claims 1 to 15,
in which a response (A) is formed in the second computer unit (N) by encrypting a constant (const), which is known in the second computer unit (N) and in the first computer unit (U), with the session key (K) using the encryption function (Enc).

17. Method according to one of Claims 1 to 16,
- in which a response (A) is formed in the second computer unit (N) by applying a third hash function (h3) to the session key (K), and
- in which the response (A) is checked in the first computer unit (U) by applying the third hash function (h3) to the session key (K), and comparing the result with the response (A).

18. Method according to one of Claims 9 to 15 or 17,
in which the response (A) is checked in the first computer unit (U) by encrypting a constant (const) with the session key (K) using the encryption function (Enc) and comparing the result with the response (A).

19. Method according to one of Claims 9 to 15 or 17,
in which the response (A) is checked in the first computer unit (U) by decrypting the response (A) with the session key (K) using the encryption function (Enc) and comparing a decrypted constant (const') with a constant (const).

20. Method according to one of Claims 1 to 19,
in which the third message (M3) additionally contains at least one optional second data field (dat2).

21. Method according to one of Claims 1 to 20,
in which the first computer unit (U) is formed by a mobile communication terminal and/or the second computer unit (N) is formed by an authentication unit in a mobile communication network.

## Revendications

1. Procédé d'échange, assisté par ordinateur, de codes cryptographiques entre une première unité d'ordinateur (U) et une deuxième unité d'ordinateur (N), dans lequel
- une première valeur (g^{t}) est formée dans la première unité d'ordinateur (U) sur la base d'un premier nombre aléatoire (t) à l'aide d'un élément générateur (g) d'un groupe fini;
- un premier message (M1) est transmis de la première unité d'ordinateur (U) à la deuxième unité d'ordinateur (N), le premier message (M1) comprenant au moins la première valeur (g^{t}) ;
- un code de session (K) est formé à l'aide d'une première fonction de hash (h1) dans la deuxième unité d'ordinateur (N), une première grandeur d'entrée de la première fonction de hash (h1) comprenant au moins un premier terme formé par exponentiation de la première valeur (g^{t}) avec un premier code de réseau (s) secret;
- le code de session (K) est formé, dans la première unité d'ordinateur (U), à l'aide de la première fonction de hash (h1), une deuxième grandeur d'entrée de la première fonction de hash (h1) comprenant au moins un deuxième terme formé par exponentiation d'un code public de réseau (g^{s}) à l'aide du premier nombre aléatoire (t);
- une quatrième grandeur d'entrée est formée dans la première unité d'ordinateur (U) à l'aide d'une deuxième fonction de hash (h2) ou de la première fonction de hash (h1), une troisième grandeur d'entrée pour la première fonction de hash (h1) ou pour la deuxième fonction de hash (h2) pour la formation de la quatrième grandeur d'entrée comprenant au moins le du code de session (K);
- un terme de signature est formé dans la première unité d'ordinateur (U) sur la base d'au moins la quatrième grandeur d'entrée et moyennant l'utilisation d'une première fonction de signature (Sig_{U});
- un troisième message (M3) est transmis de la première unité d'ordinateur (U) à la deuxième unité d'ordinateur (N), le troisième message (M3) comprenant au moins le terme de signature de la première unité d'ordinateur (U) et
- le terme de signature est vérifié dans la deuxième unité d'ordinateur (N).

2. Procédé selon la revendication 1, dans lequel
- le premier message (M1) comprend en outre une donnée d'identité (id_{CA}) d'une unité d'ordinateur de certification (CA), laquelle fournit un certificat réseau (CertN) pouvant être vérifié par la première unité d'ordinateur (U);
- un deuxième message (M2) est transmis de la deuxième unité d'ordinateur (N) à la première unité d'ordinateur (U), le deuxième message (M2) comprenant au moins le certificat réseau (CertN) et
- le certificat réseau (CertN) est vérifié dans la première unité d'ordinateur (U).

3. Procédé selon la revendication 2, dans lequel
- le troisième message (M3) est transmis de la première unité d'ordinateur (U) à la deuxième unité d'ordinateur (N), ledit troisième message (M3) comprend en outre un certificat utilisateur (CertU) et
- le certificat utilisateur (CertU) est vérifié dans la deuxième unité d'ordinateur (N).

4. Procédé selon la revendication 1, dans lequel
- le premier message (M1) comprend en outre une grandeur d'identité (IMUI) de la première unité d'ordinateur (U) et une donnée d'identité (id_{CA}) d'une unité d'ordinateur de certification (CA), laquelle fournit à la première unité d'ordinateur (U) un certificat réseau (CertN) pouvant être vérifié par la première unité d'ordinateur (U);
- un quatrième message (M4) est transmis de la deuxième unité d'ordinateur (N) à l'unité d'ordinateur de certification (CA), ledit quatrième message (M4) comprenant au moins le code public de réseau (g^{s}), la première valeur (g^{t}) et la grandeur d'identité (IMUI) de la première unité d'ordinateur (U) en tant que grandeur d'entrée, une grandeur de sortie d'une troisième fonction de hash (h3) étant signée moyennant l'utilisation d'une deuxième fonction de signature (Sig_{N});
- le premier terme signé est vérifié dans l'unité d'ordinateur de certification (CA);
- un troisième terme est formé dans l'unité d'ordinateur de certification (CA), comprend la première valeur (g^{t}), le code public de réseau (g^{s}) et une donnée d'identité (id_{N}) de la deuxième unité d'ordinateur (N);
- une valeur de hash est formée sur le troisième terme dans l'unité d'ordinateur de certification (CA) moyennant l'utilisation d'une quatrième fonction de hash (h4);
- la valeur de hash formée sur le troisième terme moyennant l'utilisation d'une troisième fonction de signature (Sig_{CA}) est signée avec un code de certification secret (U), dans l'unité d'ordinateur de certification (CA);
- un certificat réseau (CertN) est formé dans l'unité d'ordinateur de certification (CA), comprend au moins le troisième terme et la valeur de hash signée du troisième terme;
- une quatrième fonction de hash (h4) est appliquée, dans l'unité d'ordinateur de certification (CA), à un cinquième terme, comprend au moins la donnée d'identité (id_{N}) de la deuxième unité d'ordinateur (N) et un certificat utilisateur (CertU);
- la valeur de hash du cinquième terme est signée avec le code de certification secret (cs) moyennant l'utilisation de la troisième fonction de signature (Sig_{CA}) et le résultat constitue le deuxième terme signé;
- un cinquième message (M5) comprenant au moins le certificat réseau (CertN), le cinquième terme et le deuxième terme signé, est transmis de l'unité d'ordinateur de certification (CA) à la deuxième unité d'ordinateur (N);
- le certificat de réseau (CertN) et le deuxième terme signé sont vérifiés dans la deuxième unité d'ordinateur (N);
- un quatrième terme comprenant au moins le code public de réseau (g^{s}) et la valeur de hash signée du troisième terme est formé dans la deuxième unité d'ordinateur (N);
- un deuxième message (M2) est transmis de la deuxième unité d'ordinateur (N) à la première unité d'ordinateur (U), le deuxième message (M2) comprenant au moins le quatrième terme et
- le certificat réseau (CertN) est vérifié dans la première unité d'ordinateur (U).

5. Procédé selon la revendication 4, dans lequel le cinquième terme comprend en outre un cachet temporel (TS).

6. Procédé selon la revendication 4 ou 5, dans lequel
- un code intermédiaire (L) est formé dans la première unité d'ordinateur (U) avant la formation du premier message (M1) par l'élévation d'un code public de certification (g^{u}) à une certaine puissance, l'exposant étant le premier nombre aléatoire (t);
- un deuxième terme codé (VT2) est formé dans la première unité d'ordinateur (U) avant la formation du premier message (M1) sur la base de la grandeur d'identité (IMUI) de la première unité d'ordinateur (U) par codage de ladite grandeur d'identité (IMUI), avec le code intermédiaire (L) et par application d'une fonction de codage (Enc);
- le premier message (M1) comprend le deuxième terme codé (VT2) au lieu de la grandeur d'identité (IMUI) de la première unité d'ordinateur (U);
- le quatrième message (M4) comprend le deuxième terme codé (VT2) au lieu de la grandeur d'identité (IMUI) de la première unité d'ordinateur (U) et
- le deuxième terme codé (VT2) est décodé dans l'unité d'ordinateur de certification (CA) après réception du quatrième message (M4).

7. Procédé selon l'une des revendications 4 à 6, dans lequel une liste de révocation permet de contrôler, dans l'unité d'ordinateur de certification (CA), au moins l'une des grandeurs, la donnée d'identité (id_{N}) de la deuxième unité d'ordinateur (N), la grandeur d'identité ( IMUI) de la première unité d'ordinateur (U), le code public de réseau (g^{s}) ou le certificat utilisateur (CertU).

8. Procédé selon l'une des revendications 1 à 7, dans lequel
- le premier message (M1) comprend en outre au moins une ancienne grandeur d'identité temporaire (TMUIO) de la première unité d'ordinateur (U);
- une nouvelle grandeur d'identité temporaire (TMUIN) est formée dans la deuxième unité d'ordinateur (N), pour la première unité d'ordinateur (U), après réception du premier message (M1) et avant formation du deuxième message (M2);
- un quatrième terme codé (VT4) est formé sur la base de la nouvelle grandeur d'identité temporaire (TMUIN) de la première unité d'ordinateur (U) par codage de la nouvelle grandeur d'identité temporaire (TMUIN) de la première unité d'ordinateur (U), avec le code de session (K) et par application de la fonction de codage (Enc);
- le deuxième message (M2) comprend en outre au moins le quatrième terme codé (VT4);
- le quatrième terme codé (VT4) est décodé dans la première unité d'ordinateur (U) après réception du deuxième message (M2) et avant formation de la quatrième grandeur d'entrée;
- la troisième grandeur d'entrée pour la première fonction de hash (h1) ou pour la deuxième fonction de hash (h2) pour la formation de la quatrième grandeur d'entrée comprend en outre au moins la nouvelle grandeur d'identité temporaire (TMUIN) de la première unité d'ordinateur (U) s et
- le troisième message (M3) ne comprend pas la grandeur d'identité (IMUI) de la première unité d'ordinateur (U).

9. Procédé selon l'une des revendications 1 à 8, dans lequel
- une réponse (A) contenant une information concernant le code de session (K) est formée dans la deuxième unité d'ordinateur (N);
- un deuxième message (M2) est transmis de la deuxième unité d'ordinateur (N) à la première unité d'ordinateur (U), le deuxième message (M2) comprend au moins la réponse (A) et
- le code de session (K) est contrôlé, dans la première unité d'ordinateur (U), à l'aide de la réponse (A).

10. Procédé selon la revendication 9, dans lequel le troisième message (M3) comprend en outre une grandeur d'identité (IMUI) de la première unité d'ordinateur.

11. Procédé selon l'une des revendications 1 à 10, dans lequel
- la première grandeur d'entrée de la première fonction de hash (h1) comprend en outre la deuxième unité d'ordinateur (N), au moins un deuxième nombre aléatoire (r),
- le deuxième message (M2) comprend en outre le deuxième nombre aléatoire (r) et
- la deuxième grandeur d'entrée de la première fonction de hash (h1) comprend en outre, dans la première unité d'ordinateur (U), au moins le deuxième nombre aléatoire (r).

12. Procédé selon l'une des revendications 1 à 5, dans lequel
- un deuxième terme codé (VT2) est formé dans la première unité d'ordinateur (U) avant formation du troisième message (M3) sur la base de la grandeur d'identité (IMUI) de la première unité d'ordinateur (U) par codage de la grandeur d'identité (IMUI), avec le code de session (K) et par application de la fonction de codage (Enc);
- le troisième message (M3) comprend en outre le deuxième terme codé (VT2) et
- le deuxième terme codé (VT2) est décodé dans la deuxième unité d'ordinateur (N) après réception du troisième message (M3).

13. Procédé selon l'une des revendications 1 à 12, dans lequel
- le deuxième message (M2) comprend en outre un premier champ optionnel de données (dat1) et
- la troisième grandeur d'entrée pour la première fonction de hash (h1) ou pour la deuxième fonction de hash (h2) pour la formation de la quatrième grandeur d'entrée comprend en outre au moins le premier champ optionnel de données (dat1).

14. Procédé selon l'une des revendications 1 à 13, dans lequel
- un troisième terme codé (VT3) est formé dans la première unité d'ordinateur (U) avant formation du troisième message (M3) par codage d'un deuxième champ optionnel de données (dat2), avec le code de session (K) et par application de la fonction de codage (Enc);
- le troisième message (M3) comprend en outre au moins le troisième terme codé (VT3) et
- le troisième terme codé (VT3) est décodé dans la deuxième unité d'ordinateur (N) après réception du troisième message (M3).

15. Procédé selon l'une des revendications 1 à 14, dans lequel
- un premier terme codé (VT1) est formé dans la première unité d'ordinateur (U) avant formation du troisième message (M3) par codage du terme de signature, avec le code de session (K) et par application de la fonction de codage (Enc);
- le troisième message (M3) comprend en outre le premier terme codé (VT1) et
- le premier terme codé (VT1) est décodé dans la deuxième unité d'ordinateur (N) après réception du troisième message (M3) et avant vérification du terme de signature.

16. Procédé selon l'une des revendications 1 à 15, dans lequel une réponse (A) est formée dans la deuxième unité d'ordinateur (N) par codage, avec le code de session (K) et par application de la fonction de codage (Enc), d'une constante (const) connue dans la deuxième unité d'ordinateur (N) et dans la première unité d'ordinateur (U).

17. Procédé selon l'une des revendications 1 à 16, dans lequel
- une réponse (A) est formée dans la deuxième unité d'ordinateur (N) par application d'une troisième fonction de hash (h3) au code de session (K) et
- la réponse (A) est contrôlée dans la première unité d'ordinateur (U) par application de la troisième fonction de hash (h3) au code de session (K) et le résultat est comparé à la réponse (A).

18. Procédé selon l'une des revendications 9 à 15 ou 17, dans lequel la réponse (A) est contrôlée dans la première unité d'ordinateur (U) par codage d'une constante (const), avec le code de session (K) et par application de la fonction de codage (Enc), et le résultat est comparé à la réponse (A).

19. Procédé selon l'une des revendications 9 à 15 ou 17, dans lequel la réponse (A) est contrôlée dans la première unité d'ordinateur (U) par décodage de la réponse (A), avec le code de session (K) et par application de la fonction de codage (Enc), et la constante décodée (const ') est comparée à une constante (const).

20. Procédé selon l'une des revendications 1 à 19, dans lequel le troisième message (M3) comprend en outre au moins un deuxième champ optionnel de données.

21. Procédé selon l'une des revendications 1 à 20, dans lequel la première unité d'ordinateur (U) est formée par un terminal de communication mobile et/ou la deuxième unité d'ordinateur (N) est formée par une unité d'authentification d'un réseau de communication mobile.
